# EUROPEAN PATENT APPLICATION

(11) **EP 4 629 090 A1**
(43) Date of publication of application: **08.10.2025**
(21) Application number: 25703362.1
(22) Date of filing: 06.02.2025
(51) Int. Cl.: G06F 12/14, G06N 3/0495, G06N 3/065, G06F 13/28

(54) **ELECTRONIC DEVICE, METHOD, AND NON-TRANSITORY COMPUTER-READABLE RECORDING MEDIUM FOR PROTECTING ARTIFICIAL INTELLIGENCE MODEL**

(30) Priority: 19.02.2024 KR 20240023743; 15.04.2024 KR 20240049943; 03.06.2024 KR 20240072566
(71) Applicant: Samsung Electronics Co., Ltd., Suwon-si, Gyeonggi-do 16677 (KR)
(72) Inventor: KIM, Jungbae, Suwon-si, Gyeonggi-do 16677 (KR); KIM, Mooyoung, Suwon-si, Gyeonggi-do 16677 (KR); LEE, Euntaik, Suwon-si, Gyeonggi-do 16677 (KR); KIM, Dohyoung, Suwon-si, Gyeonggi-do 16677 (KR); KIM, Seungjin, Suwon-si, Gyeonggi-do 16677 (KR); LEE, Hyeonsu, Suwon-si, Gyeonggi-do 16677 (KR); CHO, Gyusung, Suwon-si, Gyeonggi-do 16677 (KR)
(74) Representative: Nederlandsch Octrooibureau
(86) International application number: PCT/KR2025/001788
(87) International publication number: WO 2025/178288

(57) **Abstract**

An electronic device is disclosed. The electronic device stores weights related to an artificial intelligence (AI) model in a non-volatile memory. The electronic device, based on a load request for a specified operation, compresses, through a compressor, partial weights related to the specified operation among the weights stored in the non-volatile memory, and loads the compressed partial weights into a first volatile memory. The electronic device decompresses, through a decompressor, the partial weights loaded into the first volatile memory with the compressed state and loads the decompressed partial weights into a second volatile memory. The electronic device performs the specified operation based on the partial weights with the decompressed state, loaded into the second volatile memory.

## Description

### [Technical Field]

The following descriptions relate to an electronic device, a method, and a non-transitory computer readable storage medium to protect an artificial intelligence model.

### [Background Art]

An artificial intelligence is a field of computer engineering and information technology that study a method enabling a computer to perform thinking, learning, self-improvement, and the like capable of being done with human intelligence, and means enabling the computer to imitate human intelligent behavior.

The artificial intelligence, which is a technology for simulating a neural activity of a person (or organism), such as perception and/or inference, may be implemented in hardware, software, or a combination thereof designed to perform a calculation for simulating of the neural activity.

### [Disclosure]

### [Technical Solution]

An electronic device is disclosed. The electronic device may comprise a compressor compressing data based on a compression algorithm, a decompressor decompressing data based on a decompression algorithm corresponding to the compression algorithm, at least one processor, non-volatile memory storing instructions, a first volatile memory, and a second volatile memory. The instructions may be loaded into the first volatile memory. The instructions, when executed by the at least one processor, individually or collectively, may cause the electronic device to store, in the non-volatile memory, weights related to an artificial intelligence (AI) model. The instructions, when executed by the at least one processor, individually or collectively, may cause the electronic device to, based on a load request for a specified operation, compress, through the compressor, partial weights related to the specified operation among the weights stored in the non-volatile memory, and load the compressed partial weights into the first volatile memory. The instructions, when executed by the at least one processor, individually or collectively, may cause the electronic device to decompress, through the decompressor, the partial weights loaded into the first volatile memory with the compressed state, and load the decompressed partial weights into the second volatile memory. The instructions, when executed by the at least one processor, individually or collectively, may cause the electronic device to perform the specified operation based on the partial weights with the decompressed state, loaded into the second volatile memory.

An electronic device is disclosed. The electronic device may comprise communication circuitry, a compressor compressing data based on a compression algorithm, a decompressor decompressing data based on a decompression algorithm corresponding to the compression algorithm, at least one processor, non-volatile memory storing instructions, a first volatile memory, and a second volatile memory. The instructions may be loaded into the first volatile memory. The instructions, when executed by the at least one processor, individually or collectively, may cause the electronic device to obtain, from a server through the communication circuitry, an artificial intelligence (AI) model including weights. The instructions, when executed by the at least one processor, individually or collectively, may cause the electronic device to, based on a store request for the weights, compress, through the compressor, the weights included in the AI model, and store the compressed weights in the non-volatile memory. The instructions, when executed by the at least one processor, individually or collectively, may cause the electronic device to load, into the first volatile memory, partial weights with a compressed state related to a specified operation among the weights, the partial weights in the compressed state being stored on the non-volatile memory. The instructions, when executed by the at least one processor, individually or collectively, may cause the electronic device to decompress, through the decompressor, the partial weights with the compressed state loaded into the first volatile memory, and load the decompressed partial weights into the second volatile memory. The instructions, when executed by the at least one processor, individually or collectively, may cause the electronic device to perform the specified operation based on the partial weights with the decompressed state, loaded into the second volatile memory.

An electronic device is disclosed. The electronic device may comprise communication circuitry, a decompressor decompressing data based on a decompression algorithm, at least one processor, non-volatile memory storing instructions, a first volatile memory, and a second volatile memory. The instructions may be loaded into the first volatile memory. The instructions, when executed by the at least one processor, individually or collectively, may cause the electronic device to obtain, from a server through the communication circuitry, an artificial intelligence (AI) model including weights in a compressed state. The instructions, when executed by the at least one processor, individually or collectively, may cause the electronic device to, based on a store request for the weights, store the weights in the compressed state in the non-volatile memory. The instructions, when executed by the at least one processor, individually or collectively, may cause the electronic device to load, into the first volatile memory, partial weights with the compressed state related to the specified operation among the weights in the compressed state. The instructions, when executed by the at least one processor, individually or collectively, may cause the electronic device to decompress, through the decompressor, the partial weights with the compressed state loaded into the first volatile memory, and load the decompressed partial weights into the second volatile memory. The instructions, when executed by the at least one processor, individually or collectively, may cause the electronic device to perform the specified operation based on the partial weights with the decompressed state, loaded into the second volatile memory.

A method is disclosed. The method may be executed by an electronic device. The method may include storing, in a non-volatile memory, weights related to an artificial intelligence (AI) model. The method may include, based on a load request for a specified operation, compressing, through a compressor, partial weights related to the specified operation among the weights stored in the non-volatile memory, and loading the compressed partial weights into a first volatile memory. The method may include decompressing, through a decompressor, the partial weights with the compressed state, loaded into the first volatile memory, and loading the decompressed partial weights into a second volatile memory. The method may include performing the specified operation based on the partial weights with the decompressed state, loaded into the second volatile memory.

A non-transitory computer readable storage medium is disclosed. The non-transitory computer readable storage medium may store a program including instructions. The instructions, when executed by at least one processor of an electronic device, individually or collectively, may cause the electronic device to store, in a non-volatile memory, weights related to an artificial intelligence (AI) model. The instructions, when executed by the at least one processor of the electronic device, individually or collectively, may cause the electronic device to, based on a load request for a specified operation, compress, through a compressor, partial weights related to the specified operation among the weights stored in the non-volatile memory, and load the compressed partial weights into a first volatile memory. The instructions, when executed by the at least one processor of the electronic device, individually or collectively, may cause the electronic device to decompress, through a decompressor, the partial weights with the compressed state, loaded into the first volatile memory, and load the decompressed partial weights into a second volatile memory. The instructions, when executed by the at least one processor of the electronic device, individually or collectively, may cause the electronic device to perform the specified operation based on the partial weights with the decompressed state, loaded into the second volatile memory.

### [Description of the Drawings]

FIG. 1 is a block diagram of an electronic device in a network environment according to various embodiments.
FIG. 2A is a block diagram of an electronic device according to an embodiment.
FIG. 2B is a block diagram of an electronic device according to an embodiment.
FIG. 2C is a block diagram of an electronic device according to an embodiment.
FIG. 3 is a block diagram of an electronic device according to an embodiment.
FIG. 4A is a block diagram of an electronic device according to an embodiment.
FIG. 4B is a block diagram of an electronic device according to an embodiment.
FIG. 4C is a block diagram of an electronic device according to an embodiment.
FIG. 4D is a block diagram of an electronic device according to an embodiment.
FIG. 5 is a block diagram of a server and an electronic device according to an embodiment.
FIG. 6 is a flowchart illustrating an operation of an electronic device according to an embodiment.
FIG. 7 is a flowchart illustrating an operation of an electronic device according to an embodiment.
FIG. 8 is a flowchart illustrating an operation of an electronic device according to an embodiment.
FIG. 9 is a flowchart illustrating an operation of an electronic device according to an embodiment.
FIG. 10 is a diagram illustrating an example of an artificial intelligence (AI) model driven by an electronic device according to an embodiment.

### [Mode for Invention]

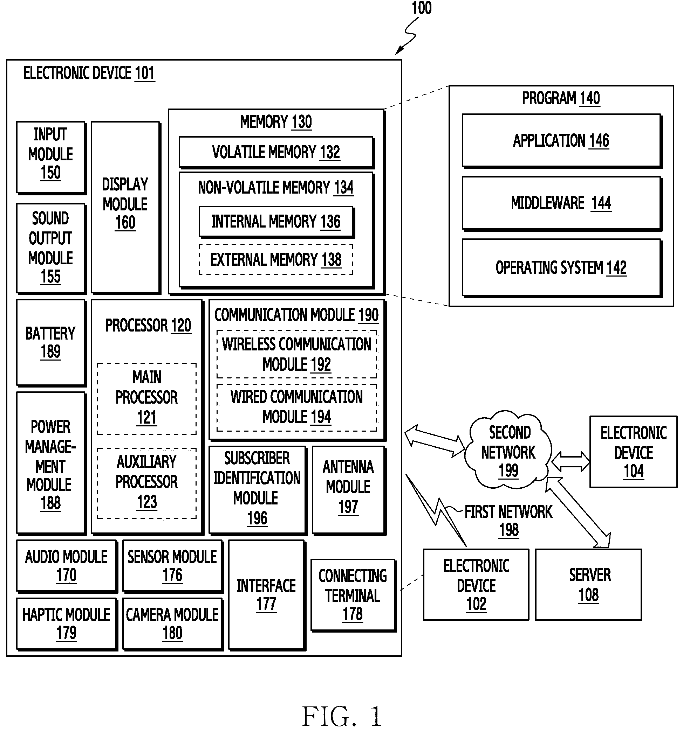

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

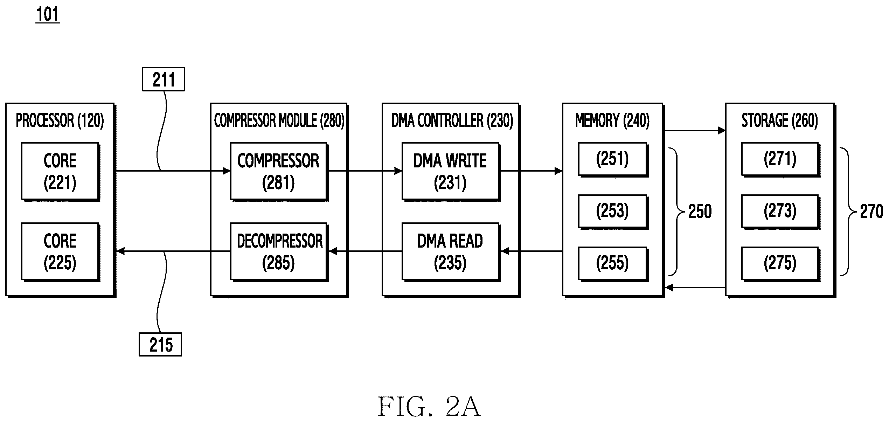

FIG. 2A is a block diagram of an electronic device according to an embodiment. FIG. 2A may be described with reference to FIG. 1.

Referring to FIG. 2A, an electronic device 101 may include a processor 120, a direct memory access (DMA) controller 230, a memory 240, a storage 260, and a compressor module 280.

In an embodiment, the processor 120 may correspond to the processor 120 of FIG. 1. In an embodiment, the processor 120 may include at least one core 221 and 225. In an embodiment, the at least one core 221 and 225 may be understood as a processor of either the main processor 121 or the auxiliary processor 123 of FIG. 1. For example, the at least one core 221 and 225 may be one of a central processing unit (hereinafter, CPU) (or an application processor (hereinafter, AP)), a graphic processing unit (GPU), a neural processing unit (NPU), an image signal processor, a sensor hub processor, or a communication processor. In an embodiment, the processor 120 may include the CPU (or AP), the GPU, or the NPU as one of the at least one core 221 and 225.

For example, the processor 120 (or the at least one core 221 and 225) may include volatile memory (e.g., register, cache, SRAM, PSRAM, or DRAM).

In an embodiment, the DMA controller 230 may include a DMA write 231 and/or a DMA read 235.

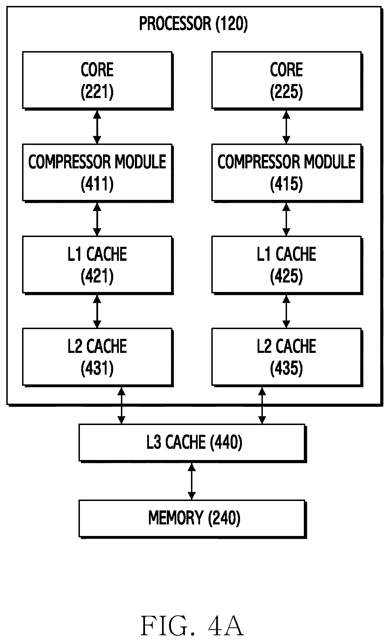

In an embodiment, the DMA controller 230 may be included in a circuit for a communication bus (or an internal bus). For example, in case that the DMA controller 230 is for providing data to the graphic processing unit (GPU) and/or the neural processing unit (NPU), it may be included in the circuit for the communication bus (or the internal bus). For example, in case that the DMA controller 230 is for providing data to the graphic processing unit (GPU) and/or the neural processing unit (NPU), the DMA controller 230 may communicate with the graphic processing unit (GPU) and/or the neural processing unit (NPU) through the communication bus (or the internal bus). In this case, the DMA controller 230, the graphic processing unit (GPU), and the neural processing unit (NPU) may be included in different integrated circuits (or different system-on-a-chips (SoCs)). However, it is not limited thereto. For example, in case that the DMA controller 230 is for providing data to the CPU (or AP), it may be included inside the CPU (or AP) (e.g., a structure of FIG. 4A).

In an embodiment, the processor 120 and the DMA controller 230 may be included in a system on a chip (SoC) (or a single integrated circuit). However, it is not limited thereto.

In an embodiment, the memory 240 may correspond to the memory 130 of FIG. 1. For example, the memory 240 may correspond to the volatile memory 132 of FIG. 1. For example, the memory 240 may be disposed outside the processor 120 and the DMA controller 230. In an embodiment, the memory 240 may be a memory that is physically distinguished from memories (e.g., a register, and at least one cache) inside the processor 120 and the DMA controller 230.

In an embodiment, the memory 240 may temporarily load data 270 stored in the storage 260 into the memory 240, based on a command (e.g., a read command) of the processor 120. In an embodiment, the memory 240 may store data 250 loaded into the memory 240 in the storage 260, based on a command (e.g., a write command) of the processor 120.

In an embodiment, the storage 260 may correspond to the non-volatile memory 134 of FIG. 1. In an embodiment, the storage 260 may transfer the data 270 stored in the storage 260 to the memory 240 in response to the read command of the processor 120. In an embodiment, the storage 260 may store the data 250 loaded into the memory 240 in the storage 260 in response to the write command of the processor 120. In an embodiment, the data 250 loaded into the memory 240 may be (substantially) the same as the data 270 stored in the storage 260.

In an embodiment, the compressor module 280 may include a compressor 281 and/or a decompressor 285.

In an embodiment, the compressor module 280 may be included in the circuit for the communication bus (or the internal bus). For example, in case that the compressor module 280 is for providing data to the graphic processing unit (GPU) and/or the neural processing unit (NPU), it may be included in the circuit for the communication bus (or the internal bus). For example, in case that the compressor module 280 is for providing data to the graphic processing unit (GPU) and/or the neural processing unit (NPU), the compressor module 280 may communicate with the graphic processing unit (GPU) and/or the neural processing unit (NPU) through the communication bus (or the internal bus). In this case, the compressor module 280, the graphic processing unit (GPU), and the neural processing unit (NPU) may be included in different integrated circuits (or different SoCs). However, it is not limited thereto. For example, in case that the compressor module 280 is for providing data to the CPU (or AP), the compressor module 280 may be included inside the CPU (or AP) (or the structure of FIG. 4A).

In an embodiment, the processor 120 and the compressor module 280 may be included in a system on a chip (SoC) (or a single integrated circuit). In an embodiment, the compressor module 280 may be integrally included in the single integrated circuit together with the CPU, the GPU, and/or the NPU. In an embodiment, the compressor module 280 may be included in a processing circuit physically distinguished from the CPU, the GPU, and/or the NPU in the SoC. However, it is not limited thereto. In an embodiment, the processor 120 and the compressor module 280 may be included in separate integrated circuits.

In an embodiment, the memory 240 and/or the storage 260 may be included in the SoC (or the single integrated circuit). In an embodiment, the memory 240 and the storage 260 may be included integrally in the single integrated circuit. In an embodiment, the memory 240 may be included in a processing circuit physically distinguished from the storage 260. However, it is not limited thereto. In an embodiment, the memory 240 and/or the storage 260 may be included in separate integrated circuits.

In an embodiment, the data 250 and 270 stored in the memory 240 and/or the storage 260 may be accessed by an application. Accordingly, the data 250 and 270 stored in the memory 240 and/or the storage 260 may be stolen by an application executed by a malicious user.

Therefore, in case of an artificial intelligence (AI) model in which the data 250 and 270 are obtained by inputting a lot of resources, the same AI model may be reconstructed through the stolen data 250 and 270 when stolen by the malicious user.

Thus, a method for protecting the data 250 and 270 related to the AI model that are stored in the memory 240 and the storage 260 may be required.

Hereinafter, an operation in which the electronic device 101 protects the data 250 and 270 related to the AI model may be described with reference to FIG. 2A.

Hereinafter, a path in which the data 270 stored in the storage 260 is transferred to the processor 120 may be described.

In an embodiment, the processor 120 (or CPU) may generate a command (or request) for loading the data 270 stored in the storage 260 that includes weights 271, 273, and 275 into the memory 240, in order to execute one or more functions related to the AI model. The one or more functions related to the AI model may include a function of training the AI model and/or a function of inferring input data based on the AI model. However, the embodiment is not limited thereto. In an embodiment, the data 270 stored in the storage 260 may be in a compressed state, based on a specified compression algorithm. For example, the specified compression algorithm may be lossless compression (e.g., run length encoding (RLE), zero value compression (ZVC), universal bandwidth compression (UBWC)). However, it is not limited thereto. According to an embodiment, a compression algorithm may be referred to as an encryption algorithm. According to an embodiment, the compression algorithm may twist (or scramble) (or interleaving) (or rearrange a sequence of data) data. Twisting (or scrambling) (or interleaving) (or rearranging the sequence of data) data may include changing or encrypting an order of at least a portion of the data without substantial changes in a size of the data.

In an embodiment, the data 270 may represent data related to an AI model, such as a layer, a weight, and an operation of the artificial intelligence (AI) model. In an embodiment, the data 270 may include a plurality of nodes and/or the weights 271, 273, and 275 assigned to a connection between the plurality of nodes that are indicated by the AI model. For example, data 210 may include the weights 271, 273, and 275 for one or more convolution operations related to the AI model. For example, the data 210 may include the weights 271, 273, and 275 for one or more convolution operations based on a convolution filter related to the AI model. For example, the data 210 may include the weights 271, 273, and 275 for one or more depthwise convolution operations related to the AI model. For example, the data 210 may include the weights 271, 273, and 275 for mean pooling operations related to the AI model. For example, the data 210 may include the weights 271, 273, and 275 for obtaining a parameter (e.g., argmax) to maximize an operation result of layers related to the AI model. For example, the data 210 may include the weights 271, 273, and 275 for linearizing (e.g., linear operation) the operation result of the layers related to the AI model. However, it is not limited thereto. The data 210 may include a hyperparameter related to the AI model. For example, the hyperparameter may include at least one of a learning rate, a cost function, a regularization parameter, a size of a mini-batch, the number of repeated training, the number of hidden layers, a meta parameter, or a free parameter.

In an embodiment, the weights 271, 273, and 275 may have quantized values. However, it is not limited thereto. The weights 271, 273, and 275 may have non-quantized (or not quantized) values.

In an embodiment, the processor 120 (or CPU) may load the data 270 stored in the storage 260 into the memory 240, based on a command (or request) for loading a weight.

In an embodiment, the processor 120 (or CPU) may generate a command (or request) for loading a weight related to an operation among weights 251, 253, and 255 that is included in the data 250 loaded into the memory 240. In an embodiment, the processor 120 (or CPU) may determine whether to perform bus compression on the data 250 (or the weights 251, 253, and 255 included in the data 250) when requesting the data 250 loaded in the memory 240. In an embodiment, the operation may be an operation for executing one or more functions related to the AI model. For example, the bus compression may refer to a function of compressing or decompressing the data 250 on a data transfer path (or bus) between the memory 240 and the processor 120. The electronic device 101 may internally decompress or compress the compressed data capable of maximizing the bus compression rate in the memory 240 through the compressor module 280 on the data transfer path (or bus) between the memory 240 and the processor 120. The electronic device 101 may transfer the data compressed through the compressor module 280 to the processor 120. The electronic device 101 may transfer the data decompressed through the compressor module 280 to the memory 240. In an embodiment, a size of the data after the compression through the compressor module 280 may be the same as a size of the data before the compression. In an embodiment, the size of data after the decompression through the compressor module 280 may be the same as the size of the data before the decompression. For example, the compression algorithm through the compressor module 280 may be lossless compression (e.g., run length encoding (RLE), zero value compression (ZVC), and universal bandwidth compression (UBWC)). In an embodiment, the compression algorithm through the compressor module 280 may be a compression algorithm capable of having the highest compression rate when compressing in the data transfer path (or bus) between the memory 240 and the processor 120. According to an embodiment, the compression algorithm may be a distortion-based compression algorithm. For example, the compression rate may represent a ratio between the size of the data before the compression and the size of the data after the compression. For example, as the size of the data after the compression decreases, the compression rate may be evaluated to be higher. According to an embodiment, the compression algorithm may be referred to as the encryption algorithm.

In an embodiment, the DMA controller 230 may load the data 250 from the memory 240 through a communication bus with the memory 240 based on the command (or request) for loading the weight related to the operation. In an embodiment, the DMA read 235 of the DMA controller 230 may load the data 250 from the memory 240 through the communication bus with the memory 240 based on the command (or request) for loading the weight related to the operation.

In an embodiment, the compressor module 280 may decompress the data 250 loaded from the memory 240 through the DMA read 235, based on a command (or request) from the processor 120 (or CPU). In an embodiment, the compressor module 280 may decompress the data 250 through the decompressor 285. In an embodiment, decompression through the decompressor 285 may be based on a specified decompression algorithm. For example, the specified decompression algorithm may be a counterpart algorithm corresponding to the specified compression algorithm applied to the data 270 (or the data 250) stored in the storage 260 (or the memory 240). For example, the specified compression algorithm may be the lossless compression (e.g., run length encoding (RLE), zero value compression (ZVC), universal bandwidth compression (UBWC)). According to an embodiment, the decompression algorithm may be referred to as a decryption algorithm.

In an embodiment, the compressor module 280 may selectively decompress the data 250 according to a determination on whether to decompress the data 250 of the processor 120 (or CPU). In an embodiment, the decompression of the data 250 through the compressor module 280 (or the decompressor 285) may be selectively bypassed according to the determination on whether to decompress the data 250 of the processor 120 (or CPU). For example, bypassing the decompression of the data 250 through the decompressor 285 may include transferring the data 250 loaded from the memory 240 to the processor 120 without decompressing. For example, bypassing the decompression of the data 250 through the decompressor 285 may include the DMA controller 230 transferring the data 250 loaded from the memory 240 through the DMA read 235 to the processor 120 without providing to the compressor module 280.

For example, the processor 120 (or CPU) may determine whether to decompress the data 250 through the decompressor 285. For example, the processor 120 (or CPU) may instruct the compressor module 280 and/or the DMA controller 230 to decompress the data 250. For example, the processor 120 (or CPU) may instruct the compressor module 280 to decompress the data 250, based on determining to decompress the data 250. For example, the compressor module 280 may decompress the data 250 through the decompressor 285, based on the processor 120 (or CPU) instructing to decompress. For example, the processor 120 (or CPU) may instruct the DMA controller 230 to transfer the data 250 based on determining not to decompress the data 250. For example, decompression through the decompressor 285 of the data 250 may be bypassed based on the processor 120 (or CPU) not instructing the compressor module 280 to decompress.

For example, the compressor module 280 may determine whether to decompress the data 250 through the decompressor 285, based on a predefined condition. For example, the compressor module 280 may decompress the data 250 satisfying the predefined condition through the decompressor 285. For example, the compressor module 280 may bypass the decompression through the decompressor 285 of the data 250 not satisfying the predefined condition. For example, in case that the data 250 is related to the AI model, the compressor module 280 may decompress the data 250 through the decompressor 285. For example, the compressor module 280 may decompress the data 250 through the decompressor 285 in case that the data 250 is related to the parameters 251, 253, and 255 for the operation through the AI model. For example, the compressor module 280 may decompress the data 250 through the decompressor 285 in case that the data 250 is related to weights for the operation through the AI model.

In an embodiment, the compressor module 280 may provide data 215 decompressed through the decompressor 285 to the processor 120 (or GPU, or NPU). For example, the data 215 may be referred to as raw data. However, it is not limited thereto. For example, in case that the data 250 is not related to the AI model, the DMA controller 230 may provide the data 210 that is not decompressed to the processor 120. In an embodiment, the processor 120 may be one of the CPU (or AP), the GPU, or the NPU. In an embodiment, the compressor module 280 may provide the data 215 decompressed through the decompressor 285 to a volatile memory (e.g., register, cache, SRAM, PSRAM, or DRAM) of the processor 120.

In an embodiment, the processor 120 (or GPU, or NPU) may perform an operation for executing one or more functions related to the AI model based on the decompressed data 215. In an embodiment, the processor 120 (or GPU, or NPU) may perform the operation for executing the one or more functions related to the AI model based on the decompressed data 215 loaded into the volatile memory (e.g., register, cache, SRAM, PSRAM, or DRAM) of the processor 120. In an embodiment, the processor 120 may perform the operation for executing the one or more functions related to the AI model based on the decompressed data 215 loaded into the volatile memory (e.g., register, cache, SRAM, PSRAM, or DRAM), through the NPU or the GPU.

Hereinafter, a path in which data 211 is transferred from the processor 120 to the storage 260 may be described.

In an embodiment, the processor 120 may generate a command (or request) for storing the data 211 related to the AI model in the memory 240. The data 211 related to the AI model may be a weight updated according to training the AI model. However, it is not limited thereto.

In an embodiment, the compressor module 280 may compress the data 211 outputted from the processor 120 based on a command (or request) from the processor 120. In an embodiment, the compressor module 280 may compress the data 211 through the compressor 281. In an embodiment, a compression through the compressor 281 may be based on a specified compression algorithm. For example, the specified compression algorithm may correspond to the specified compression algorithm applied to the data 270 (or the data 250) stored in the storage 260 (or the memory 240). In an embodiment, a size of the data after the compression through the compressor 281 may be the same as a size of the data before the compression. For example, the specified compression algorithm may be the lossless compression (e.g., run length encoding (RLE), zero value compression (ZVC), universal bandwidth compression (UBWC)). In an embodiment, weights in which the data after the compression through the compressor 281 represents may be at least partially different from the weights in which the data before the compression represents. However, it is not limited thereto. In an embodiment, the specified compression algorithm may be a compression algorithm capable of having the highest compression rate when compressing in the communication bus. According to an embodiment, the compression algorithm may be the distortion-based compression algorithm. For example, the compression rate may represent a ratio between the size of the data before the compression and the size of the data after the compression. For example, as the size of the data after the compression decreases, the compression rate may be evaluated to be higher. According to an embodiment, the compression algorithm may be referred to as the encryption algorithm.

In an embodiment, the compressor module 280 may selectively compress the data 211 according to a determination of whether to compress the data 211 of the processor 120. In an embodiment, the compression of the data 211 through the compressor module 280 (or the compressor 281) may be selectively bypassed according to the determination of whether to compress the data 211 of the processor 120. For example, bypassing the compression of the data 211 through the compressor 281 may include storing the data 211 outputted from the processor 120 in the memory 240 without compressing. For example, bypassing the compression of the data 211 through the compressor 281 may include the processor 120 transferring the data 211 to the DMA controller 230 (or the DMA write 231 of the DMA controller 230) without providing the data 211 to the compressor module 280.

For example, the processor 120 may determine whether to compress the data 211 through the compressor 281. For example, the processor 120 may instruct the compressor module 280 and/or the DMA controller 230 whether to compress the data 211. For example, the processor 120 may instruct the compressor module 280 to compress the data 211, based on determining the compression of the data 211. For example, the compressor module 280 may compress the data 211 through the compressor 281, based on the processor 120 instructing the compression. For example, the processor 120 may instruct the DMA controller 230 to store the data 211 in the memory 240, based on determining not to decompress the data 211. For example, the compression through the compressor 281 of the data 211 may be bypassed, based on the processor 120 not instructing the compressor module 280 to compress.

For example, the compressor module 280 may determine whether to compress the data 211 through the compressor 281 based on a predefined condition. For example, the compressor module 280 may compress data 211 satisfying the predefined condition, through the compressor 281. For example, the compressor module 280 may bypass the compression of the data 211 not satisfying the predefined condition, through the compressor 281. For example, the compressor module 280 may compress the data 211 through the compressor 281 in case that the data is related to the artificial intelligence (AI) model. For example, the compressor module 280 may compress the data 211 through the compressor 281 in case that the data 211 is related to the parameters 251, 253, and 255 for the operation through the AI model. For example, the compressor module 280 may compress the data 211 through the compressor 281 in case that the data is related to the weights for the operation through the AI model.

In an embodiment, the compressor module 280 may provide the data 211 compressed through the compressor 281 to the DMA controller 230. However, it is not limited thereto. For example, in case that the data 211 is not related to the AI model, the processor 120 may provide the data 211, which is not decompressed, to the DMA controller 230.

In an embodiment, the DMA controller 230 may store the data 211 compressed through the compressor 281 in the memory 240. However, it is not limited thereto. For example, in case that the data 211 is not related to the AI model, the DMA controller 230 may store the data 211, which is not compressed, in the memory 240.

In an embodiment, the DMA write 231 of the DMA controller 230 may store the compressed data 211 in the memory 240 through a communication bus with the memory 240 based on a command (or request) for storing weights related to an operation.

In an embodiment, the processor 120 may generate a command (or request) for storing the data 250 stored in the memory 240 into the storage 260. In an embodiment, the processor 120 may store the compressed data 250 stored in the memory 240 in the storage 260 based on the command (or request) for storing the data 250.

As described above, the electronic device 101 may store data of the AI model with a compressed state in the storage 260 and the memory 240. In addition, the electronic device enhances data transmission and reception performance by compressing or decompressing data through the compressor module. Furthermore, the electronic device 101 may transmit and receive with a state in which data is twisted by compressing or decompressing the data through the compressor modules. and accordingly, even if the data of the AI model is stolen from the storage 260 and the memory 240, it may be difficult for the malicious user to reconstruct the AI model through the stolen data.

As described above, the electronic device 101 may selectively store the data of the AI model, which is not intended to be disclosed, in the storage 260 and the memory 240, with the compressed state.

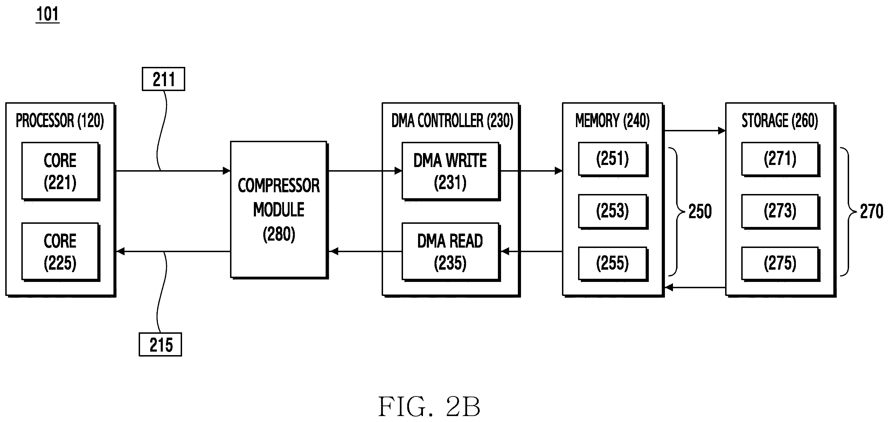

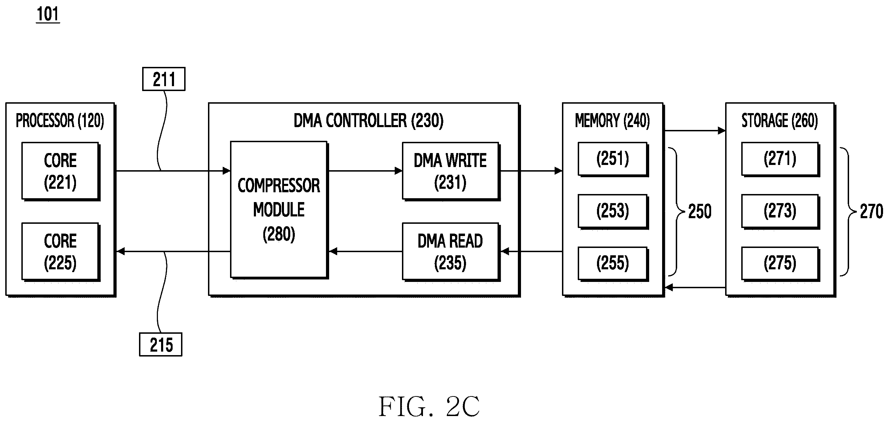

FIG. 2B is a block diagram of an electronic device according to an embodiment. FIG. 2C is a block diagram of an electronic device according to an embodiment. FIGS. 2B and 2C may be described with reference to FIGS. 1 and 2A.

Compared to the electronic device 101 of FIG. 2A, an electronic device 101 of FIG. 2B and FIG. 2C may represent a state in which an arrangement of a hardware configuration is changed.

For example, compared to the compressor module 280 of the electronic device 101 of FIG. 2A, a compressor module 280 of the electronic device 101 of FIG. 2B may perform the function performed by the compressor 281 of FIG. 2A and the function performed by the decompressor 285 of FIG. 2A through a hardware component (e.g., a processing circuit) that is unseparated.

For example, the compressor module 280 of FIG. 2B may decompress data 250 loaded from a memory 240 through a DMA read 235, based on a command (or request) from a processor 120. For example, the compressor module 280 of FIG. 2B may decompress data 211 transferred through the processor 120, based on the command (or request) from the processor 120.

For example, a compressor module 280 of the electronic device 101 of FIG. 2C may be included as a component within a DMA controller 230 compared to the compressor module 280 of the electronic device 101 of FIG. 2B. According to an embodiment, the compressor module 280 of the electronic device 101 of FIG. 2C may include the compressor 281 of FIG. 2A and the decompressor 285 of FIG. 2A, and may be included as a component within the DMA controller 230.

For example, the compressor module 280 of FIG. 2C may decompress data 250 loaded from a memory 240 through a DMA read 235, based on a command (or request) from a processor 120. For example, the compressor module 280 of FIG. 2C may decompress data 211 transferred through the processor 120, based on the command (or request) from the processor 120. In addition, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

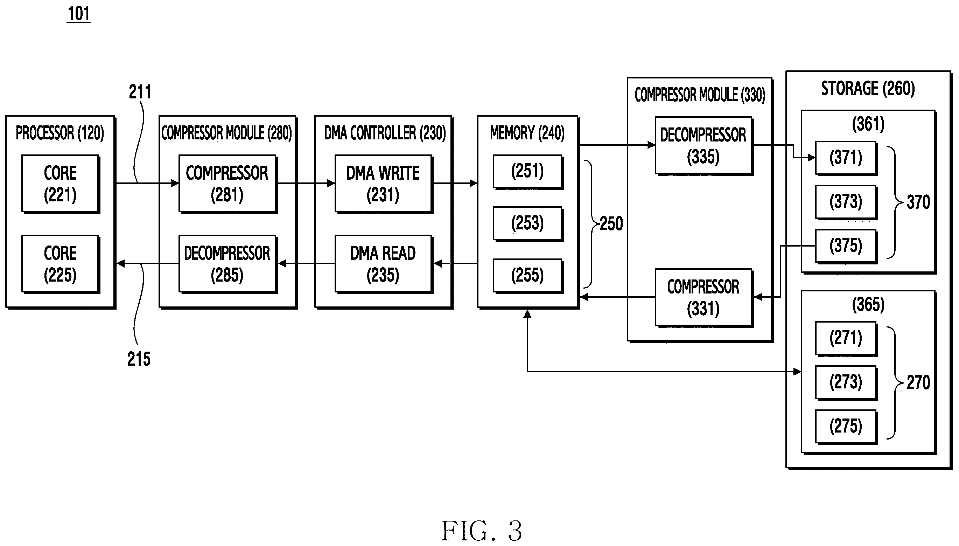

FIG. 3 is a block diagram of an electronic device according to an embodiment. FIG. 3 may be described with reference to FIGS. 1 and 2A to 2C.

Comparing an electronic device 101 of FIG. 3 and the electronic device 101 of FIGS. 2A to 2C, a storage 260 may be divided into at least two areas 361 and 365.

A first area 361 of the two areas 361 and 365 may be a protected area (or secure element (SE)) accessible from an application executed in a trusted execution environment (TEE). A second area 365 of the two areas 361 and 365 may be a general area accessible from an application executed in a rich execution environment (REE). In an embodiment, the trusted execution environment may be an environment requiring higher security than the general execution environment.

In an embodiment, data 370 stored in the first area 361 may include weights 371, 373, and 375 for executing one or more functions related to an AI model. In an embodiment, the data 370 stored in the first area 361 may correspond to data 210. In an embodiment, the data 370 stored in the first area 361 may be uncompressed data.

In an embodiment, data 270 stored in the second area 365 may include weights 271, 273, and 275 for executing one or more functions related to an AI model. In an embodiment, the data 270 stored in the second area 365 may be data compressed based on a specified compression algorithm.

Comparing the electronic device 101 of FIG. 3 and the electronic device 101 of FIGS. 2A to 2C, the electronic device 101 of FIG. 3 may further include a compressor module 330. In an embodiment, the compressor module 330 may include a compressor 331 and a decompressor 335. However, it is not limited thereto. For example, the compressor module 330 of the electronic device 101 of FIG. 3 may perform, like the compressor module 280 of FIG. 2B, the function performed by the compressor 281 of FIG. 2A and the function performed by the decompressor 285 of FIG. 2A, through a hardware component (e.g., a processing circuit) that is unseparated.

In an embodiment, the compressor 331 may compress data based on the same specified compression algorithm as the compressor 281. In an embodiment, the decompressor 335 may decompress data based on the same specified decompression algorithm as the decompressor 285.

A structure of a compressor module 280 and a DMA controller 230 of FIG. 3 is exemplified as being the same as the structure of the compressor module 280 and the DMA controller 230 of FIG. 2A, but this is only an example. According to an embodiment, the structure of the compressor module 280 and the DMA controller 230 of FIG. 3 may have one of the structures of the compressor module 280 and the DMA controller 230 of FIGS. 2A to 2C.

Hereinafter, an operation in which the electronic device 101 protects data 250, 270, and 370 related to the AI model may be described with reference to FIG. 3.

Hereinafter, a path through which the data 270 and 370 stored in the storage 260 is transferred to a processor 120 may be described. In an embodiment, the processor 120 may include at least one core 221 and 225. In an embodiment, the at least one core 221 and 225 may be understood as a processor of either the main processor 121 or the auxiliary processor 123 of FIG. 1. For example, the at least one core 221 and 225 may be one of a CPU (or AP), a GPU, or an NPU.

In an embodiment, the processor 120 may generate a command (or request) for loading data related to the AI model for executing one or more functions related to the AI model.

In an embodiment, the processor 120 may identify an area of the storage 260 in which the data related to the AI model is stored, based on a command (or request) for loading a weight. However, it is not limited thereto. In an embodiment, the processor 120 may identify whether the data related to the AI model stored in the storage 260 is compressed, based on the command (or request) for loading the weight.

In an embodiment, the processor 120 may compress the data 370 stored in the first area 361 through the compressor 331, based on the data related to the AI model being stored in the first area 361 of the storage 260. However, it is not limited thereto. In an embodiment, the processor 120 may compress the data stored in the storage 260 through the compressor 331, based on the data related to the AI model being stored in the storage 260 with an uncompressed state.

In an embodiment, the processor 120 may bypass compression of the data 270 stored in the second area 365 through the compressor 331, based on the data related to the AI model being stored in the second area 365 of the storage 260. For example, bypassing the compression of the data 270 stored in the second area 365 through the compressor 331 may include storing the data 270 stored in the storage 260 in the memory 240 without compressing.

In an embodiment, the processor 120 may generate a command (or request) for loading a weight related to an operation among weights 251, 253, and 255 included in the data 250 stored in the memory 240. In an embodiment, the DMA controller 230 may decompress the data 250 loaded from the memory 240 through the decompressor 285, based on the command (or request) for loading the weight related to the operation. In an embodiment, the DMA controller 230 may provide decompressed data 210 to the processor 120 through the decompressor 285. In an embodiment, the processor 120 may perform an operation for executing one or more functions related to the AI model, based on the decompressed data 210.

Hereinafter, a path in which the data 210 obtained from the processor 120 is transferred to the storage 260 may be described.

In an embodiment, the processor 120 may generate a command (or request) for storing the data 210 related to the AI model into the memory 240. In an embodiment, the DMA controller 230 may obtain the data 210 from the processor 120 through a communication bus with the processor 120, based on the command (or request) for storing the data 210. In an embodiment, the DMA controller 230 may compress the data 210 outputted from the processor 120 through the compressor 281. In an embodiment, the processor 120 may generate a command (or request) for storing the compressed data 250 stored in the memory 240 into the storage 260.

In an embodiment, the processor 120 may identify an area of the storage 260 in which the compressed data 250 is to be stored, based on the command (or request) for storing the compressed data 250. In an embodiment, the processor 120 may determine an area in which the compressed data 250 is stored from among the first area 361 or the second area 365, based on the command (or request) for storing the compressed data 250. However, it is not limited thereto. In an embodiment, the processor 120 may identify whether it is necessary to decompress the data related to the AI model to be stored in the storage 260 based on the command (or request) for storing the compressed data 250.

In an embodiment, the processor 120 may decompress the compressed data 250 through the decompressor 335, based on identification that the compressed data 250 is stored in the first area 361 of the storage 260. However, it is not limited thereto. For example, the processor 120 may determine whether to decompress the data 250 through the decompressor 335, regardless of the compressed data 250 being stored in the first area 361 of the storage 260. In an embodiment, the processor 120 may decompress the compressed data 250 through the decompressor 335, based on identification that decompression of the data related to the AI model to be stored in the storage 260 is required.

In an embodiment, the processor 120 may store the decompressed data 370 in the first area 361 of the storage 260.

In an embodiment, the processor 120 may bypass the decompression of the compressed data 250 through the decompressor 335, based on identifying that the data related to the AI model is stored in the second area 365 of the storage 260. For example, bypassing the decompression of the compressed data 250 through the decompressor 335 may include storing the data 250 stored in the memory 240 in the storage 260 (or the second area 365 of the storage 260) without decompressing.

As described above, the electronic device 101 may store data of the AI model in the different areas 361 and 365 of the storage 260. For example, the electronic device 101 may store the data of the AI model with an uncompressed state when the data of the AI model is stored in an area (e.g., the protected area 361 of the storage 260) where a possibility to be stolen is low, and store the data of the AI model with a compressed state when the data of the AI model is stored in an area (e.g., the general area 365 of the storage 260) where the possibility to be stolen is relatively high. In addition, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

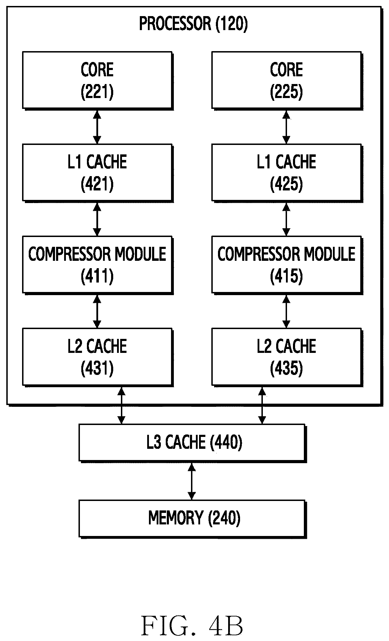

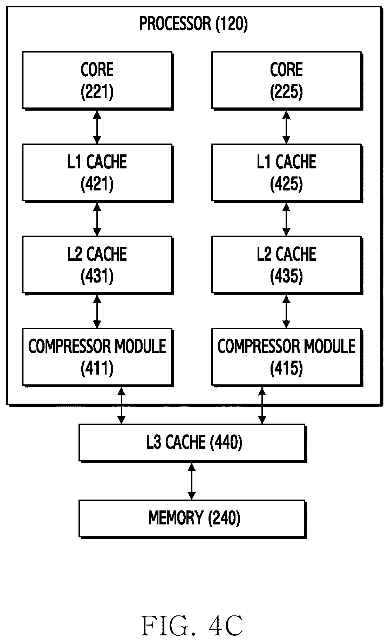

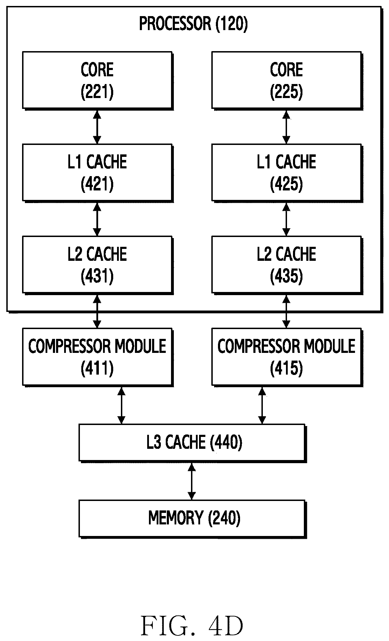

FIG. 4A is a block diagram of an electronic device according to an embodiment. FIG. 4B is a block diagram of an electronic device according to an embodiment. FIG. 4C is a block diagram of an electronic device according to an embodiment. FIG. 4D is a block diagram of an electronic device according to an embodiment.

FIGS. 4A to 4D may be described with reference to the electronic device 101 of FIGS. 1 to 3.

Referring to FIGS. 4A to 4D, compressor modules 411 and 415 may be disposed in an electronic device 101, in order to correspond to each of cores 221 and 225 of a processor 120. Each of the compressor modules 411 and 415 may correspond to the compressor module 280 of FIGS. 2A to 2C or FIG. 3. For example, each of the compressor modules 411 and 415 may include a compressor 281 and a decompressor 285.

In an embodiment, a compression algorithm and a decompression algorithm applied to each of the compressor modules 411 and 415 may be the same. However, it is not limited thereto. The compression algorithm (or the decompression algorithm) applied to each of the compressor modules 411 and 415 may be different from each other.

The cores 221 and 225 of the processor 120 of FIGS. 4A to 4D may be distinguished from a graphic processing unit (GPU), a neural processing unit (NPU), an image signal processor, a sensor hub processor, or a communication processor. The cores 221 and 225 may be a CPU (or AP).

In an embodiment, referring to FIGS. 4A to 4C, in the processor 120, the compressor modules 411 and 415 may be disposed after a specified memory step, in order to avoid (or prevent) data from being stolen.

For example, referring to FIG. 4A, the compressor modules 411 and 415 may be disposed in a path between L1 caches 421 and 425, and the cores 221 and 225, in order to avoid (or prevent) data stored in specified caches (e.g., L3 cache 440, L2 caches 431 and 435, and L1 caches 421 and 425) from being stolen. For example, referring to FIG. 4A, the compressor modules 411 and 415 may be disposed between registers of each of the L1 caches 421 and 425 and the cores 221 and 225. However, it is not limited thereto. For example, referring to FIG. 4B, the compressor modules 411 and 415 may be disposed in a path between the L2 caches 431 and 435 and the L1 caches 421 and 425, in order to avoid (or prevent) the data stored in the specified caches (e.g., L3 cache 440, L2 caches 431 and 435, and L1 caches 421 and 425) from being stolen. For example, referring to FIGS. 4C and 4D, the compressor modules 411 and 415 may be disposed in a path between the L3 cache 440 and the L2 caches 431 and 435, in order to avoid (or prevent) the data stored in the specified caches (e.g., L3 cache 440, L2 caches 431 and 435, and L1 caches 421 and 425) from being stolen. For example, referring to FIG. 4C, when the compressor modules 411 and 415 are disposed in the path between the L3 cache 440 and the L2 caches 431 and 435, the compressor modules 411 and 415 may be integrally included in the processor 120. For example, referring to FIG. 4D, when the compressor modules 411 and 415 are disposed in the path between the L3 cache 440 and the L2 caches 431 and 435, the compressor modules 411 and 415 may be included on a separate circuit from the processor 120.

For example, the compressor module 411 may decompress data related to an AI model stored with a compressed state in response to a read request from the core 221. In an embodiment, the compressor module 411 may provide the decompressed data to the core 221.

For example, the compressor module 411 may compress the data related to the AI model in a decompressed state in response to a write request from the core 221. In an embodiment, the compressor module 411 may provide the compressed data to the L1 cache 421.

According to an embodiment, the compressor modules 411 and 415 may be implemented as a software module. In case that the compressor modules 411 and 415 are implemented as a software module, the compressor modules 411 and 415 may decompress the compressed data related to the AI model stored in the L1 caches 421 and 425. For example, the compressor modules 411 and 415 may input the decompressed data to registers of each of the cores 221 and 225. However, itis not limited thereto.

As described above, even when a read request occurs from any one of the cores 221 and 225, the data related to the AI model may not be stored in a cache memory with a decompressed state. In addition, the electronic device 101 may improve data transmission/reception performance (e.g., data throughput) by compressing or decompressing data through the compressor modules 411 and 415. Furthermore, the electronic device 101 may transmit and receive with a state in which data is twisted by compressing or decompressing the data through the compressor modules 411 and 415, and accordingly, even if the twisted data is stolen, an effect which makes a malicious user difficult to recover an original AI model may be obtained.

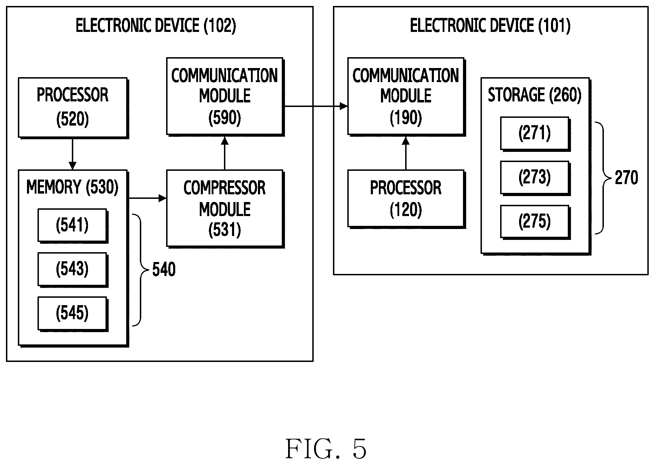

FIG. 5 is a block diagram of a server and an electronic device according to an embodiment.

FIG. 5 may be described with reference to the electronic device 101 of FIGS. 1 to 3.

Referring to FIG. 5, an electronic device 102 may include a processor 520, a memory 530, a communication module 590, and a compressor module 531. In an embodiment, the processor 520 may correspond to the processor 120 of FIG. 1. In an embodiment, the memory 530 may correspond to the memory 240 of FIG. 1. In an embodiment, the communication module 590 may correspond to the communication module 190 of FIG. 1. In an embodiment, the compressor module 531 may correspond to the compressor modules 280 of FIGS. 2A to 2C and FIG. 3. In an embodiment, the compressor module 531 may include a hardware structure for compressing data and a hardware structure for decompressing data. However, it is not limited thereto. The compressor module 531 may be implemented as software. For example, the compressor module 531 may be software including instructions for a function to compress data and a function to decompress data.

In an embodiment, the electronic device 102 may be a portable communication device (e.g., a smartphone) and/or a computer device (e.g., a laptop, a desktop). In an embodiment, the electronic device 102 may be a server (e.g., the server 108 of FIG. 1).

In an embodiment, the electronic device 102 may compress weights of an original AI model (e.g., an AI model in which data related to the AI model is not compressed) within the electronic device 102 (or in an offline state) by using the compressor module 531, and provide an AI model including the compressed weights (or twisted weights) to the electronic device 101. Herein, the compressed weights (or twisted weights) have the same size as uncompressed weights (or non-twisted weights), but may be in a state compressed not to restore the original AI model. For example, the compressor module 531 may compress the weights of the original AI model based on the same compression algorithm as the compressor module 280 of the electronic device 101. Herein, the compression algorithm of the compressor module 280 may be different for each electronic device 101 (or for each processor 120) (or for each SoC). In addition, the compression algorithm of the compressor module 280 applied to the electronic device 101 may be a very high level of confidential information.

In an embodiment, the electronic device 102 may directly or indirectly transmit data 540 including weights 541, 543, and 545 to the electronic device 101 through the communication module 590 for executing one or more functions related to the AI model. In an embodiment, the electronic device 102 may directly transmit data compressed from the data 540 to the electronic device 101 through the compressor module 531 through a communication path (e.g., over-the-air (OTA)) between the communication module 590 and the communication module 190. In an embodiment, the electronic device 102 may indirectly transmit the data compressed from the data 540 to the electronic device 101 through the compressor module 531 through another server. In an embodiment, the other server may be a server of an application store (e.g., Play Store ^{™}). However, it is not limited thereto.

In an embodiment, the electronic device 102 may obtain identification information of the electronic device 101. For example, the identification information of the electronic device 101 may include information on the compression algorithm applied to the compressor module 280 of the electronic device 101.

In an embodiment, the electronic device 102 may compress the data 540 based on a specified compression algorithm identified based on the identification information of the electronic device 101. For example, the electronic device 102 may directly or indirectly transmit the compressed data 540 to the electronic device 101 through the communication module 590.

In an embodiment, the electronic device 101 may store the compressed data 540 obtained from the electronic device 102 as data 270 in a storage 260.

According to an embodiment, the electronic device 102 may transmit data for updating an AI model to the electronic device 101, based on the AI model related to the compressed data 540 transmitted to the electronic device 101 being updated. For example, the electronic device 102 may distribute update data of an application related to the AI model installed in the electronic device 101 through the application store (e.g., Play Store ^{™}). For example, the electronic device 102 may distribute the update data for updating the AI model to the electronic device 101 through the OTA. In an embodiment, the update data may be data (or weight) compressed in the compressor module 531 of the server 108 based on a specified compression algorithm of the compressor module 280 of the electronic device 101.

As described above, when obtaining data (or weights) related to the AI model, the electronic device 101 may obtain already compressed (or encrypted) data (or weights). Accordingly, a possibility in which a malicious user steals uncompressed data (or weights) related to the AI model though the electronic device 101 may be lower. In addition, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

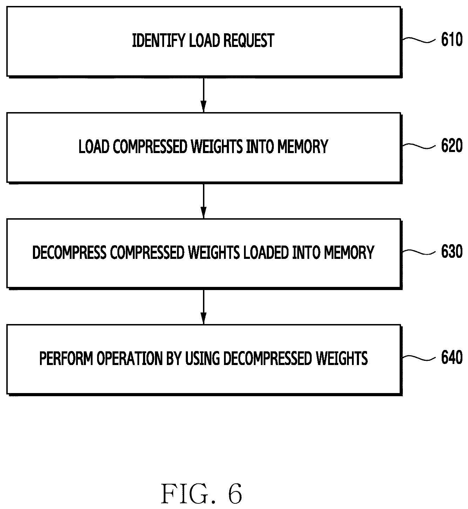

FIG. 6 is a flowchart illustrating an operation of an electronic device according to an embodiment.

FIG. 6 may be described with reference to the electronic device 101 of FIGS. 1 to 3.

Referring to FIG. 6, in operation 610, an electronic device 101 may identify a load request. In an embodiment, the electronic device 101 may generate a command (or request) for loading (or reading) weights 271, 273, and 275 for executing one or more functions related to an AI model.

In operation 620, the electronic device 101 may load compressed weights into a memory 240. In an embodiment, the electronic device 101 may load weights stored in a storage 260 into the memory 240 with a compressed state. In an embodiment, the electronic device 101 may load the weights stored with the compressed state in the storage 260 into the memory 240. However, it is not limited thereto. In an embodiment, the electronic device 101 may compress the weights stored in the storage 260 through a compressor module 330, based on the weights stored in the storage 260 being in an uncompressed state.

In operation 630, the electronic device 101 may decompress the compressed weights loaded into the memory 240. The electronic device 101 may decompress the compressed weights through a compressor module 280 (e.g., compression/decompression IP). In an embodiment, a compression algorithm performed based on the compressor module 330 may be a counterpart algorithm of a decompression algorithm based on the compressor module 280.

In operation 640, the electronic device 101 may perform an operation by using the decompressed weights. In an embodiment, the electronic device 101 may perform an operation for executing one or more functions related to the AI model, based on the decompressed weights. The one or more functions related to the AI model may include a function of training the AI model and/or a function of inferring input data based on the AI model. However, it is not limited thereto. In that way, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

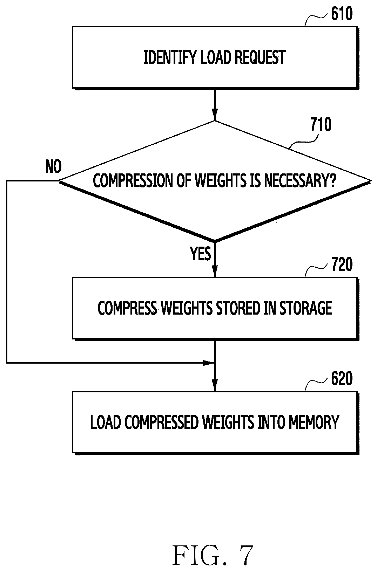

FIG. 7 is a flowchart illustrating an operation of an electronic device according to an embodiment.

FIG. 7 may be described with reference to the electronic device 101 of FIGS. 1 to 3. Operations 610 and 620 of FIG. 7 may correspond to the operations 610 and 620 of FIG. 6, respectively.

Referring to FIG. 7, in the operation 610, an electronic device 101 may identify a load request.

In operation 710, the electronic device 101 may determine whether compression of weights is necessary. In an embodiment, the electronic device 101 may identify whether the compression of the weights is necessary, based on an area of a storage 260 in which the weights related to an AI model are stored. In an embodiment, the electronic device 101 may identify whether the compression of the weights is necessary, based on whether the weights related to the AI model stored in the storage 260 are compressed.

In an embodiment, the electronic device 101 may identify that the compression of the weights is necessary, based on the area of the storage 260 in which the weights related to the AI model are stored being a first area 361 (or a protected area) (or a secure element (SE)). In an embodiment, the electronic device 101 may identify that the compression of the weights is not necessary, based on the area of the storage 260 in which the weights related to the AI model are stored being a second area 365 (or a general area).

In an embodiment, the electronic device 101 may identify that the compression of the weights is necessary, based on determining that the weight related to the AI model stored in the storage 260 are not compressed. In an embodiment, the electronic device 101 may identify that the compression of the weights is not necessary, based on determining that the weights related to the AI model stored in the storage 260 are compressed.

In operation 720, the electronic device 101 may compress the weights stored in the storage 260. The electronic device 101 may compress the weights stored in the storage 260 with an uncompressed state through a compressor module 330. The electronic device 101 may compress the weights stored in the first area 361 of the storage 260 through the compressor module 330.

In the operation 620, the electronic device 101 may load the compressed weights into a memory 240. In that way, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

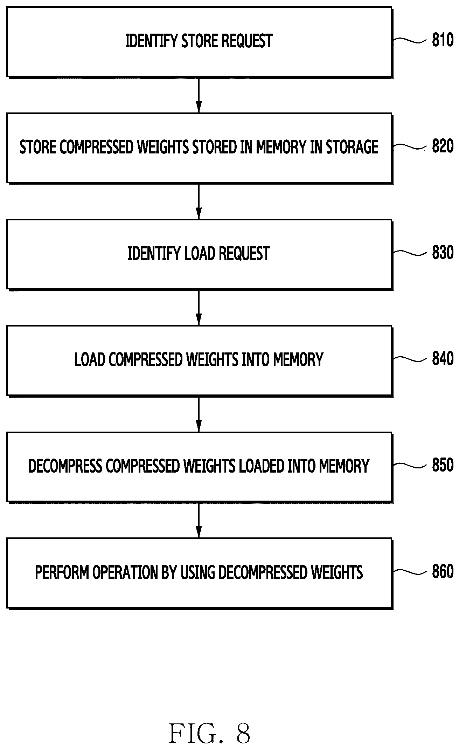

FIG. 8 is a flowchart illustrating an operation of an electronic device according to an embodiment.

FIG. 8 may be described with reference to the electronic device 101 of FIGS. 1 to 3.

Referring to FIG. 8, in operation 810, an electronic device 101 may identify a store request. In an embodiment, the store request may include a command (or request) for storing weights retained by a processor 120 into a memory 240. In an embodiment, the store request may include a command (or request) of the processor 120 for storing the weights stored in the memory 240 into a storage 260. For example, the store request may include a command (or request) of the processor 120 for storing the weights included in the data obtained from the electronic device 102 of FIG. 5 into the storage 260. For example, the data obtained from the electronic device 102 may be data which compressed weights of the original AI model (e.g., an AI model in a state that data related to the AI model is not compressed) in the electronic device 102 (or in an offline state) by using a compressor module 531.

In operation 820, the electronic device 101 may store the compressed weights stored in the memory 240 in the storage 260.

In an embodiment, the electronic device 101 may compress the weights retained by the processor 120 through a compressor 281. In an embodiment, the electronic device 101 may store the compressed weights in the memory 240 with a compressed state. However, it is not limited thereto. The electronic device 101 may store the compressed weights stored in the memory 240 in the storage 260 with an uncompressed state.

Referring to FIG. 8, in operation 830, the electronic device 101 may identify a load request. The operation 830 may correspond to the operation 610 of FIG. 6.

In operation 840, the electronic device 101 may load the compressed weights into the memory 240. The operation 840 may correspond to the operation 620 of FIG. 6.

In operation 850, the electronic device 101 may decompress the compressed weights loaded into the memory 240. The operation 850 may correspond to the operation 630 of FIG. 6.

In operation 860, the electronic device 101 may perform an operation by using the decompressed weights. The operation 860 may correspond to the operation 640 of FIG. 6. In addition, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

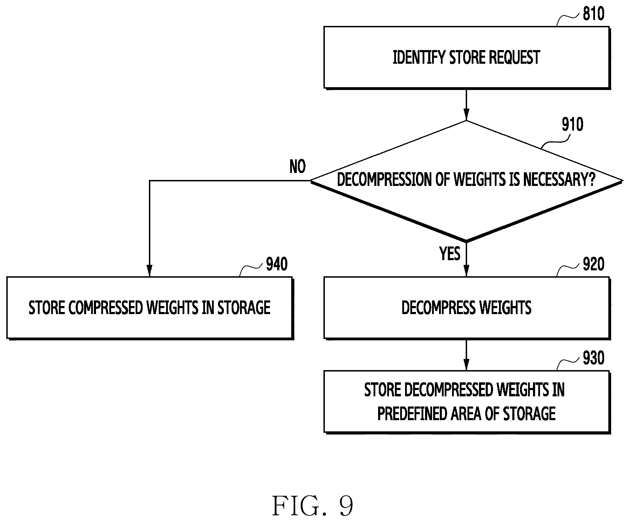

FIG. 9 is a flowchart illustrating an operation of an electronic device according to an embodiment.

FIG. 9 may be described with reference to the electronic device 101 of FIGS. 1 to 3. Operation 810 of FIG. 9 may correspond to the operation 810 of FIG. 8.

Referring to FIG. 9, in the operation 810, an electronic device 101 may identify a store request. The operation 810 may correspond to the operation 810 of FIG. 8. For example, the store request may include a command (or request) of a processor 120 for storing weights stored in a memory 240 into a storage 260. For example, the store request may include a command (or request) of the processor 120 for storage of the weights included in the data obtained from the electronic device 102 of FIG. 5 into the storage 260. For example, the data obtained from the electronic device 102 may be data which compressed weights of an original AI model (e.g., an AI model in a state that data related to the AI model is not compressed) in the electronic device 102 (or in an offline state) by using a compressor module 531.

In operation 910, the electronic device 101 may determine whether decompression of the weights is necessary. In an embodiment, the electronic device 101 may identify whether the decompression of the weights is necessary, based on an area of the storage 260 in which weights related to an AI model are to be stored.

In an embodiment, the electronic device 101 may identify that the decompression of the weights is necessary, based on the area of the storage 260 in which the weights related to the AI model are to be stored being a first area 361 (or a protected area) (or a secure element (SE)). In an embodiment, the electronic device 101 may identify that the decompression of the weights is not necessary, based on the area of the storage 260 in which the weights related to the AI model are to be stored being the second area 365 (or a general area).

In operation 920, the electronic device 101 may decompress the weights stored in the memory 240. The electronic device 101 may decompress the weights stored in the memory 240 with a compressed state, through a decompressor 335.

In operation 930, the electronic device 101 may store the decompressed weights in a predefined area of the storage 260. The electronic device 101 may store the decompressed weights in the first area 361 (or protected area) (or SE) of the storage 260.

In operation 940, the electronic device 101 may store the compressed weights in the storage 260. The electronic device 101 may store the weights stored in the memory 240 with a compressed state, in the storage 260 (or the second area 365 of the storage 260) without decompressing. In that way, the electronic device enhances data transmission and reception performance by compressing or decompressing data through the compressor modules. Furthermore, the electronic device 101 may transmit and receive with a state in which data is twisted by compressing or decompressing the data through the compressor modules, and accordingly, even if the twisted data is stolen, an effect which makes a malicious user difficult to recover an original AI model may be obtained.

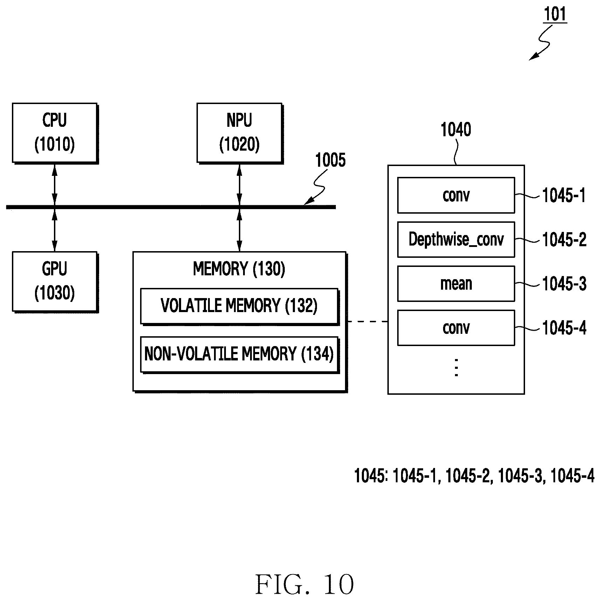

FIG. 10 is a diagram illustrating an example of an artificial intelligence (AI) model driven by an electronic device according to an embodiment.

FIG. 10 illustrates an example of a model 1040 driven by an electronic device 101 according to an embodiment. The electronic device 101 of FIG. 10 may be an example of the electronic device 101 of FIG. 1. Referring to FIG. 10, the electronic device 101 according to an embodiment may include at least one of a central processing unit (CPU) 1010, a neural processing unit (NPU) 1020, a graphic processing unit (GPU) 1030, or a memory 130. The CPU 1010, the NPU 1020, the GPU 1030, and the memory 130 may be electronically and/or operably coupled with each other by an electronical component such as a communication bus 1005. A type and/or the number of hardware components included in the electronic device 101 is not limited as illustrated in FIG. 10. Hereinafter, hardware components being operably coupled may mean that a direct or indirect connection between the hardware components is established by wire or wirelessly, so that a second hardware component among the hardware components is controlled by a first hardware component.

Referring to FIG. 10, the electronic device 101 according to an embodiment may include a hardware component (e.g., the CPU 1010, the NPU 1020, the GPU 1030, and/or the memory 130) for performing an operation on the model 1040 related to an artificial neural network. The model 1040, and/or the artificial neural network may include a recognition model implemented in software or hardware that mimics a computational capability of a biological system by using a large number of artificial neurons (or nodes). For example, the electronic device 101 according to an embodiment may execute functions similar to human's perception or a learning process, based on the model 1040. The electronic device 101 may output data including generalized information on input data, based on operations indicated by the model 1040 and sequentially performed by a plurality of parameters. The memory 130 of the electronic device 101 may store the plurality of parameters related to the model 1040. The CPU 1010, the NPU 1020, and/or the GPU 1030 of the electronic device 101 may include a circuit for performing the operations, which are sequentially performed by the plurality of parameters.

According to an embodiment, the CPU 1010 of the electronic device 101 may include a hardware component for processing data, based on one or more instructions. The hardware component for processing data may include, for example, an arithmetic and logic unit (ALU), a floating point unit (FPU), and/or a field programmable gate array (FPGA). In an embodiment, the CPU 1010 may be referred to as an application processor (AP). The number of the CPU 1010 may be one or more. For example, the CPU 1010 may have a structure of a multi-core processor such as a dual core, a quad core, or a hexa core. The CPU 1010 of FIG. 10 may be an example of the processor 120 and/or the main processor 121 of FIG. 1.

The NPU 1020 of the electronic device 101 according to an embodiment may include a hardware component dedicated to calculations related to the model 1040. For example, the NPU 1020 may include a plurality of circuits for performing calculations (e.g., multiplication, and/or addition) performed continuously and/or in parallel, based on the model 1040. The plurality of circuits included in the NPU 1020 may be referred to as neural engines. The NPU 1020 may perform the calculations, based on a specified data type (e.g., the number of floating points, and/or an integer) related to the model 1040.

The GPU 1030 of the electronic device 101 according to an embodiment may include one or more pipelines performing a plurality of operations for executing instructions related to computer graphics and/or parallel operations. For example, the pipeline of the GPU 1030 may generate a third-dimensional image, and include a graphics pipeline or rendering pipeline for generating a two-dimensional raster image from the generated three-dimensional image. Calculations related to the artificial neural network may be executed substantially simultaneously by using graphics pipelines.

The CPU 1010, the NPU 1020, and the GPU 1030 of FIG. 10 may be included as different integrated circuits, or may be included in a single IC based on a system on a chip (SoC) in the electronic device 101. For example, the CPU 1010, the NPU 1020, the GPU 1030, or a combination thereof may be included in a single integrated circuit included in the electronic device 101. A type of processing unit included based on the SoC is not limited to the above example, and for example, another hardware component (e.g., communication processor) not illustrated in FIG. 10 may be included in the single integrated circuit together with the CPU 1010, the NPU 1020, and the GPU 1030. Hereinafter, in terms of the subject of the calculations of the artificial neural network indicated by the model 1040, the CPU 1010, the NPU 1020, the GPU 1030, or a combination thereof may be referred to as an artificial intelligence (AI) accelerator (or an accelerator). The AI accelerator may be referred to as an accelerator.

The memory 130 of the electronic device 101 according to an embodiment may include a hardware component for storing data and/or instructions inputted to and/or outputted from the CPU 1010, the NPU 1020, and/or the GPU 1030. The memory 130 may include, for example, a volatile memory 132 such as random-access memory (RAM) and/or a non-volatile memory 134 such as read-only memory (ROM). The volatile memory 132 may include, for example, at least one of dynamic ram (DRAM), static ram (SRAM), cache ram, and pseudo sram (PSRAM). The non-volatile memory 134 may include, for example, at least one of programmable rom (PROM), erasable prom (EPROM), electrically erasable prom (EEPROM), flash memory, a hard disk, a compact disk, and an embedded multi media card (eMMC). The memory 130, the volatile memory 132, and the non-volatile memory 134 of FIG. 10 may correspond to each of the memory 130, the volatile memory 132, and the non-volatile memory 134 of FIG. 1.

In the memory 130, one or more instructions (or commands) representing an operation to be performed by the CPU 1010, the NPU 1020, and/or the GPU 1030 based on data may be stored. A set of one or more instructions may be referred to as firmware, an operating system, a process, a routine, a sub-routine, and/or an application. For example, the CPU 1010, the NPU 1020, and/or the GPU 1030 of the electronic device 101 may perform at least one of the operations of FIGS. 1 to 10 when a set of a plurality of instructions distributed in a form of an operating system, firmware, a driver, and/or an application is executed. Hereinafter, an application being installed in the electronic device 101 may mean that one or more instructions provided in a form of an application are stored in the memory 130 of the electronic device 101, and which is that the one or more applications are stored in an executable format (e.g., a file with an extension specified by the operating system of the electronic device 101), by the CPU 1010, the NPU 1020, and/or GPU 1030. The pipeline init of FIG. 10 may be executed by the CPU 1010 of the electronic device 101, and configured to control the CPU 1010, the NPU 1020, and/or the GPU 1030.

According to an embodiment, the electronic device 101 may identify the model 1040 based on one or more files stored in the non-volatile memory 134. The one or more files may be related to an application (e.g., the application 146 of FIG. 1), middleware (e.g., the middleware 144 of FIG. 1), and/or an operating system (e.g., the operating system 142 of FIG. 1) installed in the electronic device 101. In an embodiment in which the model 1040 related to the application is stored in the non-volatile memory 134, the CPU 1010 may identify the model 1040 stored in the non-volatile memory 134 based on the execution of the application. Identifying the model 1040 stored in the non-volatile memory 134 may include an operation of copying (or loading) a plurality of parameters stored in the non-volatile memory 134 and related to the model 1040 to the volatile memory 132. The identifying the model 1040 stored in the non-volatile memory 134 may include an operation of obtaining a plurality of instructions for performing calculations indicated by the model 1040, based on the plurality of parameters stored in the volatile memory 132. Accelerators such as the CPU 1010, the NPU 1020, and/or the GPU 1030 may execute one or more functions related to the model 1040 indicated by the plurality of parameters stored in the volatile memory 132, based on the plurality of instructions. The one or more functions may include at least one of a function of performing training of the model 1040, a function of performing inference on input data based on the model 1040, a function of performing video-based object recognition, voice recognition, and/or handwriting recognition by using the trained model 1040, and a function personalized to a user of the electronic device 101 based on a neural network. However, an embodiment is not limited thereto.

According to an embodiment, the electronic device 101 may perform the calculations indicated by the model 1040 based on a plurality of parameters related to the model 1040. The plurality of parameters may include a plurality of nodes indicated by the model 1040 and/or weights assigned to a connection between the plurality of nodes. The plurality of parameters may include a hyperparameter related to the model 1040. The hyperparameter may include, for example, at least one of a learning rate, a cost function, a regularization parameter, a size of a mini-batch, the number of repeated training, the number of hidden layers, a meta parameter, or a free parameter.

The electronic device 101 according to an embodiment may perform calculations related to input data based on the artificial intelligence model 1040 by using an accelerator. The electronic device 101 may obtain output data from the input data, which is inputted to the artificial intelligence model 1040, based on a performance of chained (or serial or consecutive) calculations, based on the plurality of parameters of the artificial intelligence model 1040. The input data may include a plurality of numeric values preprocessed to be inputted to the artificial intelligence model 1040. The plurality of numeric values may indicate a vector to be inputted to the artificial intelligence model 1040. The electronic device 101 may obtain at least one numeric value indicating the output data by changing the plurality of numeric values included in the input data based on the plurality of parameters and the calculations that are indicated by the artificial intelligence model 1040. The calculations and/or the plurality of parameters related to the artificial intelligence model 1040 may be distinguished by an operation, a graph, and/or a layer.

Referring to FIG. 10, an exemplary order of operations 1045-1, 1045-2, 1045-3, and 1045-4 included in the artificial intelligence model 1040 is illustrated. The operations 1045-1, 1045-2, 1045-3, and 1045-4 may be referred to as a sub-model included in the artificial intelligence model 1040. The CPU 1010 of the electronic device 101 may select the artificial intelligence model 1040 and/or the sub-model from among models corresponding to different sizes, according to a size of input data, and then load to the NPU 1020 and/or the GPU 1030.

Each of the operations 1045-1, 1045-2, 1045-3, and 1045-4 may include a group of calculations that the electronic device 101 continuously performs based on driving of the artificial intelligence model 1040. The operations 1045-1, 1045-2, 1045-3, and 1045-4 may be distinguished by a type of calculation performed by the electronic device 101. Referring to FIG. 10, the electronic device 101 may sequentially perform calculations on the input data based on an order of the operations 1045-1, 1045-2, 1045-3, and 1045-4 in the artificial intelligence model 1040. For example, the operation 1045-1 may indicate one or more convolution calculations based on a convolution filter related to the artificial intelligence model 1040. The operation 1045-2 performed after the operation 1045-1 may indicate one or more depthwise convolution calculations related to the artificial intelligence model 1040 to input data changed by the operation 1045-1. The operation 1045-3 performed after the operation 1045-2 may indicate mean pooling calculations related to the artificial intelligence model 1040 to input data changed by the operations 1045-1 and 1045-2. The operation 1045-4 performed after the operation 1045-3 may indicate convolution calculations related to the artificial intelligence model 1040 to input data changed by the operations 1045-1, 1045-2, and 1045-3.

In an embodiment, numeric values included in input data inputted to the artificial intelligence model 1040 may be changed based on connections between a plurality of nodes included in the artificial intelligence model 1040. The plurality of nodes may be distinguished into a unit of layer. In an embodiment in which a plurality of parameters includes weights connecting two nodes of different layers of the artificial intelligence model 1040, the electronic device 101 may apply the weights to values corresponding to nodes of a specific layer, and obtain values corresponding to nodes of another layer connected to the specific layer. In the artificial intelligence model 1040, a layer including nodes into which values included in input data are inputted may be referred to as an input layer. The last layer of the layers sequentially connected in the artificial intelligence model 1040 may be referred to as an output layer. Each of the operations 1045-1, 1045-2, 1045-3, and 1045-4 of FIG. 10 may include at least one of the layers included in the artificial intelligence model 1040. For example, the operation 1045-1 may indicate a group of interconnected layers based on a convolution filter form among the layers in the artificial intelligence model 1040. Hereinafter, a graph may mean a graph formed by connections between nodes included in the layers. The graph included in the artificial intelligence model 1040 may be distinguished by the operations 1045-1, 1045-2, 1045-3, and 1045-4 included in the artificial intelligence model 1040.

As described above, an electronic device 101 may comprise a compressor 331 compressing data based on a compression algorithm, a decompressor 285 decompressing data based on a decompression algorithm corresponding to the compression algorithm, at least one processor 120, non-volatile memory storing instructions, a first volatile memory, and a second volatile memory. The instructions may be loaded into the first volatile memory. The instructions, when executed by the at least one processor 120, individually or collectively, may cause the electronic device 101 to store, in the non-volatile memory, weights related to an artificial intelligence (AI) model. The instructions, when executed by the at least one processor 120, individually or collectively, may cause the electronic device 101 to, based on a load request for a specified operation, compress, through the compressor 331, partial weights related to the specified operation among the weights stored in the non-volatile memory, and load the compressed partial weights into the first volatile memory. The instructions, when executed by the at least one processor 120, individually or collectively, may cause the electronic device 101 to decompress, through the decompressor 285, the partial weights with the compressed state, loaded into the first volatile memory, and load the decompressed partial weights into the second volatile memory. The instructions, when executed by the at least one processor 120, individually or collectively, may cause the electronic device 101 to perform the specified operation based on the partial weights with the decompressed state, loaded into the second volatile memory.

As described above, the non-volatile memory, the first volatile memory, and the second volatile memory may be implemented through at least one processing circuit of these. For example, at least one of the non-volatile memory, the first volatile memory, or the second volatile memory may be included in a system on a chip (SoC) (or integrated circuitry). However, it is not limited thereto. The non-volatile memory, the first volatile memory, and the second volatile memory may be included in each of different separate (or physically distinguished) integrated circuitry.

The compression algorithm may include an algorithm that changes an order of at least portion of the data or encodes the at least portion of the data while substantially maintaining size of the data. The decompression algorithm may include an algorithm that restores the order of the at least portion of the data or decodes the at least portion of the data while substantially maintaining size of the data.

The instructions, when executed by the at least one processor 120, individually or collectively, may cause the electronic device 101 to, as at least a portion of an operation of compression through the compressor 331, change an order of the at least portion of data of the partial weights or encodes the at least portion of data of the partial weights. The instructions, when executed by the at least one processor 120, individually or collectively, may cause the electronic device 101 to, as at least a portion of an operation of decompression through the decompressor 285, restore the order of the at least portion of data of the partial weights or decodes the at least portion of data of the partial weights.

The at least one processor 120 may comprise a neural processing unit (NPU). The NPU may comprise the second volatile memory.

The decompressor may be included in the at least one processor 120.

The at least one processor may comprise a control processing unit (CPU), a neural processing unit (NPU), and a graphic processing unit (GPU). The instructions, when executed by the CPU, may cause the electronic device 101 to store the weights in the non-volatile memory 260, compress the partial weights and load the compressed partial weights into the first volatile memory, and decompress the partial weights and load the decompressed partial weights into the second volatile memory. The instructions, when executed by the NPU or the GPU, may cause the electronic device 101 to perform the specified operation based on the partial weights with the decompressed state, loaded into the second volatile memory.

The electronic device 101 may comprise communication circuitry 190. The instructions, when executed by the at least one processor 120, individually or collectively, may cause the electronic device 101 to obtain, from a server 108 through the communication circuitry 190, the AI model including the weights. The instructions, when executed by the at least one processor 120, individually or collectively, may cause the electronic device 101 to store the obtained AI model in the non-volatile memory 260.

The non-volatile memory may comprise a general area and a protected area. The instructions, when executed by the at least one processor 120, individually or collectively, may cause the electronic device 101 to determine an area storing the partial weights between the general area and the protected area, based on the load request for the specified operation.

The instructions, when executed by the at least one processor 120, individually or collectively, may cause the electronic device 101 to, in case that the partial weights are stored in the general area, compress, through the compressor 331, the partial weights, and load the compressed partial weights into the first volatile memory. The instructions, when executed by the at least one processor 120, individually or collectively, may cause the electronic device 101 to, in case that the partial weights are stored in the protected area, bypass the compressor 331, and load the partial weights into the first volatile memory, such that the partial weights are not compressed through the compressor 331.

As described above, an electronic device 101 may comprise communication circuitry 190, a compressor 331 compressing data based on a compression algorithm, a decompressor 285 decompressing data based on a decompression algorithm corresponding to the compression algorithm, at least one processor 120, non-volatile memory storing instructions, a first volatile memory, and a second volatile memory. The instructions may be loaded into the first volatile memory. The instructions, when executed by the at least one processor 120, individually or collectively, may cause the electronic device 101 to obtain, from a server 108 through the communication circuitry 190, an artificial intelligence (AI) model including weights. The instructions, when executed by the at least one processor 120, individually or collectively, may cause the electronic device 101 to, based on a store request for the weights, compress, through the compressor 331, the weights included in the AI model, and store the compressed weights in the non-volatile memory 260. The instructions, when executed by the at least one processor 120, individually or collectively, may cause the electronic device 101 to load, into the first volatile memory, partial weights related to a specified operation among the weights with a compressed state, the partial weights in the compressed state being stored on the non-volatile memory 260. The instructions, when executed by the at least one processor 120, individually or collectively, may cause the electronic device 101 to decompress, through the decompressor 285, the partial weights with the compressed state loaded into the first volatile memory, and load the decompressed partial weights into the second volatile memory. The instructions, when executed by the at least one processor 120, individually or collectively, may cause the electronic device 101 to perform the specified operation based on the partial weights with the decompressed state, loaded into the second volatile memory.

The compression algorithm may include an algorithm that changes an order of at least portion of the data or encodes the at least portion of the data while substantially maintaining size of the data. The decompression algorithm may include an algorithm that restores the order of the at least portion of the data or decodes the at least portion of the data while substantially maintaining size of the data.

The instructions, when executed by the at least one processor 120, individually or collectively, may cause the electronic device 101 to, as at least a portion of an operation of compression through the compressor 331, change the order of the at least portion of data of the partial weights or encodes the at least portion of data of the partial weights. The instructions, when executed by the at least one processor 120, individually or collectively, may cause the electronic device 101 to, as at least a portion of an operation of decompression through the decompressor 285, restore the order of the at least portion of the data of the partial weights or decodes the at least portion of the data of the partial weights.

The at least one processor 120 may comprise a neural processing unit (NPU). The NPU may comprise the second volatile memory.

The decompressor may be included in the at least one processor 120.

The at least one processor may comprise a central processing unit (CPU), a neural processing unit (NPU), and a graphic processing unit (GPU). The instructions, when executed by the CPU, may cause the electronic device 101 to obtain the AI model, compress the weights and store the weights in the non-volatile memory 260, load the partial weights into the first volatile memory, and decompress the partial weights and load the decompressed partial weights into the second volatile memory. The instructions, when executed by the NPU or the GPU, may cause the electronic device 101 to perform the specified operation based on the partial weights with the decompressed state, loaded into the second volatile memory.

The non-volatile memory may comprise a general area and a protected area. The instructions, when executed by the at least one processor 120, individually or collectively, may cause the electronic device 101 to determine an area storing the partial weights between the general area and the protected area, based on the load request for the specified operation.

The instructions, when executed by the at least one processor 120, individually or collectively, may cause the electronic device 101 to, in case that the partial weights are stored in the general area, compress, through the compressor 331, the partial weights, and load the compressed partial weights into the first volatile memory. The instructions, when executed by the at least one processor 120, individually or collectively, may cause the electronic device 101 to, in case that the partial weights are stored in the protected area, bypass the compressor 331, and load the partial weights into the first volatile memory, such that the partial weights are not compressed by the compressor 331.

As described above, an electronic device 101 may comprise communication circuitry 190, a decompressor 285 decompressing data based on a decompression algorithm, at least one processor 120, non-volatile memory storing instructions, a first volatile memory, and a second volatile memory. The instructions may be loaded into the first volatile memory. The instructions, when executed by the at least one processor 120, individually or collectively, may cause the electronic device 101 to obtain, from a server 108 through the communication circuitry 190, an artificial intelligence (AI) model including weights in a compressed state. The instructions, when executed by the at least one processor 120, individually or collectively, may cause the electronic device 101 to, based on a store request for the weights, store the weights in the compressed state in the non-volatile memory 260. The instructions, when executed by the at least one processor 120, individually or collectively, may cause the electronic device 101 to load, into the first volatile memory, partial weights with the compressed state, related to the specified operation among the weights in the compressed state. The instructions, when executed by the at least one processor 120, individually or collectively, may cause the electronic device 101 to decompress, through the decompressor 285, the partial weights with the compressed state, loaded into the first volatile memory, and load the decompressed partial weights into the second volatile memory. The instructions, when executed by the at least one processor 120, individually or collectively, may cause the electronic device 101 to perform the specified operation based on the partial weights with the decompressed state, loaded into the second volatile memory.

As described above, a method executed by the electronic device 101 may include storing, in a non-volatile memory, weights related to an artificial intelligence (AI) model. The method may include, based on a load request for a specified operation, compressing, through a compressor 331, partial weights related to the specified operation among the weights stored in the non-volatile memory, and loading the compressed partial weights into a first volatile memory. The method may include decompressing, through a decompressor 285, the partial weights with the compressed state, loaded into the first volatile memory, and loading the decompressed partial weights into a second volatile memory. The method may include performing the specified operation based on the partial weights with the decompressed state, loaded into the second volatile memory.

As described above, a non-transitory computer readable storage medium may store a program including instructions. The instructions, when executed by at least one processor 120 of an electronic device 101, individually or collectively, may cause the electronic device 101 to store, in a non-volatile memory, weights related to an artificial intelligence (AI) model. The instructions, when executed by the at least one processor 120 of the electronic device 101, individually or collectively, may cause the electronic device 101 to, based on a load request for a specified operation, compress, through a compressor 331, partial weights related to the specified operation among the weights stored in the non-volatile memory, and load the compressed partial weights into a first volatile memory. The instructions, when executed by the at least one processor 120 of the electronic device 101, individually or collectively, may cause the electronic device 101 to decompress, through a decompressor 285, the partial weights with the compressed state, loaded into the first volatile memory, and load the decompressed partial weights into a second volatile memory. The instructions, when executed by the at least one processor 120 of the electronic device 101, individually or collectively, may cause the electronic device 101 to perform the specified operation based on the partial weights with the decompressed state, loaded into the second volatile memory.

As described above, an electronic device 101 may include a compressor 331 compressing data based on a compression algorithm, a direct memory access (DMA) controller 230 that includes a decompressor 285 decompressing data based on a decompression algorithm corresponding to the compression algorithm, at least one processor 120 including a processing circuit, a storage 260 storing weights related to an artificial intelligence (AI) model, and a memory 240 that is located outside the at least one processor 120 and temporarily stores instructions when used by the at least one processor 120. The instructions, when executed by the at least one processor 120, individually or collectively, may cause the electronic device 101 to, based on a load request for a specified operation, identify an area on the storage 260 where partial weights related to the specified operation among the weights are stored. The instructions, when executed by the at least one processor 120, individually or collectively, may cause the electronic device 101 to, based on the partial weights being stored in a general area on the storage 260, bypass the compressor 331, and load the partial weights into the memory 240. The instructions, when executed by the at least one processor 120, individually or collectively, may cause the electronic device 101 to, based on the partial weights being stored in a protected area on the storage 260, load the partial weights with a compressed state into the memory 240 through the compressor 331. The instructions, when executed by the at least one processor 120, individually or collectively, may cause the electronic device 101 to decompress the partial weights loaded into the memory 240 through the decompressor 285. The instructions, when executed by the at least one processor 120, individually or collectively, may cause the electronic device 101 to perform the specified operation, based on the decompressed partial weights, through the processor 120.

The instructions, when executed by the at least one processor 120, individually or collectively, may cause the electronic device 101 to, in response to a read request from the at least one processor 120, read the partial weights loaded into the memory 240 through the DMA controller 230. The instructions, when executed by the at least one processor 120, individually or collectively, may cause the electronic device 101 to decompress the read partial weights, through the decompressor 285.

The electronic device 101 may include communication circuitry 190. The instructions, when executed by the at least one processor 120, individually or collectively, may cause the electronic device 101 to obtain the AI model including the weights from a server 108 through the communication circuitry 190. The instructions, when executed by the at least one processor 120, individually or collectively, may cause the electronic device 101 to store the obtained AI model including the weights in the storage 260.

The weights of the AI model before being obtained from the server 108 through the communication circuitry 190, and stored in the storage 260 may be compressed by the compression algorithm.

The DMA controller 230 and the at least one processor 120 may be included in a single integrated circuit. The at least one processor 120 may be an application processor 120. The decompressor 285 of the DMA controller 230 may be configured to input the partial weights to a register of the at least one processor 120, after decompressing the partial weights stored in L1 caches 421 and 425 of the at least one processor 120. The DMA controller 230 and the at least one processor 120 may be included in different integrated circuits. The DMA controller 230 and the at least one processor 120 may be connected to each other to be able to communicate through a bus. The at least one processor 120 may be a graphic processing unit and/or a neural processing unit.

The compression algorithm may be a lossless compression algorithm.

The DMA controller 230 may include another compressor 281 compressing data based on the compression algorithm. The instructions, when executed by the at least one processor 120, individually or collectively, may cause the electronic device 101 to compress other weights through the other compressor 281, based on a store request for the other weights stored in the processor 120. The instructions, when executed by the at least one processor 120, individually or collectively, may cause the electronic device 101 to store the compressed other weights in the memory 240. The instructions, when executed by the at least one processor 120, individually or collectively, may cause the electronic device 101 to store the compressed other weights stored in the memory 240 in the storage 260.

Another decompressor 335 decompressing data based on the decompression algorithm may be included. The instructions, when executed by the at least one processor 120, individually or collectively, may cause the electronic device 101 to identify an area on the storage 260 in which other weights are stored, based on a store request of the other weights stored in the memory 240. The instructions, when executed by the at least one processor 120, individually or collectively, may cause the electronic device 101 to bypass the other decompressor 335 and store the other weights in the storage 260, based on the other weights being stored in the general area on the storage 260. The instructions, when executed by the at least one processor 120, individually or collectively, may cause the electronic device 101 to store the other weights in the storage 260 with a decompressed state through the other decompressor 335, based on the other weights being stored in the protected area on the storage 260.

As described above, a method may be performed in the electronic device 101. The method may include identifying an area on a storage 260 in which partial weights related to a specified operation are stored among weights related to the artificial intelligence (AI) model based on a load request for the specified operation. The method may include bypassing a compressor 331, and loading the partial weights into a memory 240, based on the partial weights being stored in a general area on the storage 260. The method may include loading the partial weights into the memory 240 with a compressed state through the compressor 331, based on the partial weights being stored in a protected area on the storage 260. The method may include decompressing the partial weights loaded into the memory 240 through a decompressor 285 of a direct memory access (DMA) controller 230. The method may include performing the specified operation based on the decompressed partial weights, through a processor 120.

The method may include reading the partial weights loaded into the memory 240 through the DMA controller 230 in response to a read request from the processor 120. The method may include decompressing the read partial weights through the decompressor 285.

The method may include obtaining the AI model including the weights from a server 108 through communication circuitry 190. The method may include storing the obtained AI model including the weights in the storage 260.

The weights of the AI model before being obtained from the server 108 through the communication circuitry 190, and stored in the storage 260 may be compressed by the compression algorithm.

The method may include compressing other weights through another compressor 281, based on a store request of the other weights stored in the processor 120. The method may include storing the compressed other weights in the memory 240. The method may include storing the compressed other weights stored in the memory 240 in the storage 260.

The method may include identifying an area on the storage 260 in which other weights are stored, based on a store request of the other weights stored in the memory 240. The method may include bypassing another decompressor 335 and storing the other weights in the storage 260, based on the other weights being stored in a general area on the storage 260. The method may include storing the other weights in the storage 260 with a decompressed state through the other decompressor 335, based on the other weights being stored in a protected area on the storage 260.

As described above, a non-transitory computer-readable storage medium may store a program including instructions. The instructions, when executed by at least one processor 120 of an electronic device 101, individually or collectively, may cause the electronic device 101 to identify an area on a storage 260 in which partial weights related to a specified operation are stored among the weights, based on a load request of the specified operation. The instructions, when executed by the at least one processor 120, individually or collectively, may cause the electronic device 101 to bypass a compressor 331, and load the partial weights into a memory 240, based on the partial weights being stored in a general area on the storage 260. The instructions, when executed by the at least one processor 120, individually or collectively, may cause the electronic device 101 to load the partial weights with a compressed state into the memory 240, through the compressor 331, based on the partial weights being stored in a protected area on the storage 260. The instructions, when executed by the at least one processor 120, individually or collectively, may cause the electronic device 101 to decompress the partial weights loaded into the memory 240 through a decompressor 285 of a direct memory access (DMA) controller 230. The instructions, when executed by the at least one processor 120, individually or collectively, may cause the electronic device 101 to perform the specified operation based on the decompressed partial weights, through the processor 120.

The instructions, when executed by the at least one processor 120, individually or collectively, may cause the electronic device 101 to read the partial weights loaded into the memory 240, through the DMA controller 230 in response to a read request from the processor 120. The instructions, when executed by the at least one processor 120, individually or collectively, may cause the electronic device 101 to decompress the read partial weights through the decompressor 285.

The instructions, when executed by the at least one processor 120, individually or collectively, may cause the electronic device 101 to compress other weights through another compressor 281, based on a store request for the other weights stored in the processor 120. The instructions, when executed by the at least one processor 120, individually or collectively, may cause the electronic device 101 to store the compressed other weights in the memory 240. The instructions, when executed by the at least one processor 120, individually or collectively, may cause the electronic device 101 to store the compressed other weights stored in the memory 240 in the storage 260.

The instructions, when executed by the at least one processor 120, individually or collectively, may cause the electronic device 101 to identify an area on the storage 260 in which other weights are stored, based on a store request of the other weights stored in the memory 240. The instructions, when executed by the at least one processor 120, individually or collectively, may cause the electronic device 101 to bypass another decompressor 335 and store the other weights in the storage 260, based on the other weights being stored in the general area on the storage 260. The instructions, when executed by the at least one processor 120, individually or collectively, may cause the electronic device 101 to store the other weights in the storage 260 with a decompressed state through the other decompressor 335, based on the other weights being stored in the protected area on the storage 260. In that way, the electronic device enhances data transmission and reception performance by compressing or decompressing data through the compressor modules. Furthermore, the electronic device 101 may transmit and receive with a state in which data is twisted by compressing or decompressing the data through the compressor modules 411 and 415, and accordingly, even if the twisted data is stolen, an effect which makes a malicious user difficult to recover an original AI model may be obtained.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a compressor (331) compressing data based on a compression algorithm,
a decompressor (285) decompressing data based on a decompression algorithm corresponding to the compression algorithm,
at least one processor (120),
non-volatile memory storing instructions,
a first volatile memory, and
a second volatile memory, and
wherein the instructions, are loaded into the first volatile memory, and, when executed by the at least one processor (120), individually or collectively, cause the electronic device (101) to:
store, in the non-volatile memory, weights related to an artificial intelligence, AI, model,
based on a load request for a specified operation, compress, through the compressor (331), partial weights related to the specified operation, wherein the partial weights correspond to some of the weights among the weights stored in the non-volatile memory, and load the compressed partial weights into the first volatile memory,
decompress, through the decompressor (285), the partial weights with a compressed state, loaded into the first volatile memory, and load the decompressed partial weights into the second volatile memory, and
perform the specified operation based on the partial weights with a decompressed state, loaded into the second volatile memory.

2. The electronic device of claim 1,
wherein the compression algorithm includes an algorithm that changes an order of at least portion of the data or encodes the at least portion of the data while maintaining size of the data, and
wherein the decompression algorithm includes an algorithm that restores the order of at least portion of the data or decodes the at least portion of the data while maintaining size of the data.

3. The electronic device of any one of preceding claims,
wherein the instructions, when executed by the at least one processor (120), individually or collectively, cause the electronic device (101) to:
as at least a portion of an operation of compression through the compressor (331), change an order of the partial weights or encode the partial weights, and
as at least a portion of an operation of decompression through the decompressor (285), restore the order of the partial weights or decode the partial weights.

4. The electronic device of any of preceding claims,
wherein the at least one processor comprises a neural processing unit, NPU, and
wherein the NPU comprises the second volatile memory.

5. The electronic device of any of preceding claims,
wherein the decompressor is included in the at least one processor (120).

6. The electronic device of any of preceding claims,
wherein the at least one processor comprises a central processing unit, CPU, a neural processing unit, NPU, and a graphic processing unit, GPU, and
wherein the instructions, when executed by the CPU, cause the electronic device (101) to:
store the weights in the non-volatile memory (260),
compress the partial weights, and load the compressed partial weights into the first volatile memory, and
decompress the partial weights, and load the decompressed partial weights into the second volatile memory, and
wherein the instructions, when executed by the NPU or the GPU, cause the electronic device (101) to:
perform the specified operation based on the partial weights with a decompressed state, loaded into the second volatile memory.

7. The electronic device of any of preceding claims, comprising:
communication circuitry (190),
wherein the instructions, when executed by the at least one processor (120), individually or collectively, cause the electronic device (101) to:
obtain, from a server (108) through the communication circuitry (190), the AI model including the weights, and
store the obtained AI model in the non-volatile memory (260).

8. The electronic device of any of preceding claims,
wherein the non-volatile memory comprises a general area and a protected area, and
wherein the instructions, when executed by the at least one processor (120), individually or collectively, cause the electronic device (101) to:
determine an area storing the partial weights among the general area and the protected area, based on the load request for the specified operation,
in case that the partial weights are stored in the general area, compress, through the compressor (331), the partial weights, and load the compressed partial weights into the first volatile memory, and
in case that the partial weights are stored in the protected area, bypass the compressor (331), and load the partial weights into the first volatile memory, such that the partial weights are not compressed through the compressor (331).

9. An electronic device (101) comprising:
communication circuitry (190),
a compressor (331) compressing data based on a compression algorithm,
a decompressor (285) decompressing data based on a decompression algorithm corresponding to the compression algorithm,
at least one processor (120),
non-volatile memory storing instructions,
a first volatile memory, and
a second volatile memory, and
wherein the instructions, are loaded into the first volatile memory, and, when executed by the at least one processor (120), individually or collectively, cause the electronic device (101) to:
obtain, from a server (108) through the communication circuitry (190), an artificial intelligence, AI, model including weights,
based on a store request for the weights, compress, through the compressor (331), the weights included in the AI model, and store the compressed weights in the non-volatile memory (260),
load, into the first volatile memory, partial weights with a compressed state related to a specified operation among the weights, wherein the partial weights correspond to some of the weights among the weights stored in the non-volatile memory (260), the partial weights in the compressed state being stored in the non-volatile memory,
decompress, through the decompressor (285), the partial weights with the compressed state loaded into the first volatile memory, and load the decompressed partial weights into the second volatile memory, and
perform the specified operation based on the partial weights with a decompressed state, loaded into the second volatile memory.

10. The electronic device of claim 9,
wherein the compression algorithm includes an algorithm that changes an order of at least portion of the data or encodes the at least portion of the data while maintaining size of the data, and
wherein the decompression algorithm includes an algorithm that restores the order of the at least portion of the data or decodes the at least portion of the data while maintaining size of the data.

11. The electronic device of any one of claims 9 to 10,
wherein the instructions, when executed by the at least one processor (120), individually or collectively, cause the electronic device (101) to:
as at least a portion of an operation of compression through the compressor (331), changes the order of the partial weights or encodes the partial weights, and
as at least a portion of an operation of decompression through the decompressor (285), restore the order of the partial weights or decodes the partial weights.

12. The electronic device of any one of claims 9 to 11,
wherein the at least one processor (120) comprises a neural processing unit, NPU, and
wherein the NPU comprises the second volatile memory.

13. The electronic device of any one of claims 9 to 12,
wherein the decompressor is included in the at least one processor (120).

14. The electronic device of any one of claims 9 to 13,
wherein the at least one processor comprises a central processing unit, CPU, a neural processing unit, NPU, and a graphic processing unit, GPU, and
wherein the instructions, when executed by the CPU, cause the electronic device (101) to:
obtain the AI model,
compress the weights and store the compressed weights in the non-volatile memory (260),
load the partial weights into the first volatile memory, and
decompress the partial weights, and load the decompressed partial weights into the second volatile memory, and
wherein the instructions, when executed by the NPU or the GPU, cause the electronic device (101) to:
perform the specified operation based on the partial weights with a decompressed state, loaded into the second volatile memory.

15. The electronic device of any one claims 9 to 14,
wherein the non-volatile memory comprises a general area and a protected area, and
wherein the instructions, when executed by the at least one processor (120), individually or collectively, cause the electronic device (101) to:
determine an area storing the partial weights among the general area and the protected area, based on the load request for the specified operation,
in case that the partial weights are stored in the general area, compress, through the compressor (331), the partial weights, and load the compressed partial weights into the first volatile memory, and
in case that the partial weights are stored in the protected area, bypass the compressor (331), and load the partial weights into the first volatile memory, such that the partial weights are not compressed by the compressor (331).
